# FASCICULE DE BREVET EUROPEEN

(11) **EP 0 936 090 B1**
(45) Date de publication et mention de la délivrance du brevet: **22.09.2004**
(21) Numéro de dépôt: 99400202.0
(22) Date de dépôt: 28.01.1999
(51) Int. Cl.: B60H 1/00

(54) **Dispositif de chauffage et/ou climatisation de véhicule automobile, avec gestion améliorée de l'échange thermique**
Heiz- und/oder Klimatisierungsvorrichtung eines Kraftfahrzeuges mit verbessertem Wärmetausch-Management
Heating and/or air conditioning device in a motor vehicle with improved heat exchange management

(30) Priorité: 29.01.1998 FR 9801000
(43) Date de publication de la demande: 18.08.1999
(73) Titulaire: VALEO CLIMATISATION, 78321 La Verrière (FR)
(72) Inventeur: Vincent, Philippe, 28230 Epernon (FR)

(56) Documents cités:
- EP-A- 0 733 502
- EP-A- 0 799 733
- DE-A- 3 740 132
- DE-A- 19 727 088
- DE-A- 19 800 103
- GB-A- 884 918
- US-A- 4 842 047
- US-A- 5 309 731
- US-A- 5 857 905

## Description

L'invention concerne un dispositif de chauffage et/ou de climatisation de l'habitacle d'un véhicule automobile.

Elle concerne plus particulièrement un dispositif du type comprenant des moyens pulseurs propres à envoyer un flux d'air au travers d'un boîtier logeant au moins un échangeur de chaleur et communiquant avec une sortie dégivrage, une sortie aération et une sortie pieds.

On connaît déjà des dispositifs de ce type, dans lesquels le boîtier loge un évaporateur et un radiateur de chauffage en sorte qu'un flux d'air puisse traverser successivement l'évaporateur et le radiateur de chauffage pour y être refroidi et/ou réchauffé, en fonction du confort aérothermique souhaité par le ou les occupants du véhicule.

Le flux d'air ainsi refroidi et/ou réchauffé est ensuite envoyé en différentes régions de l'habitacle par la sortie dégivrage, la sortie aération et la sortie pieds.

On connaît en particulier, d'après EP 0 733 502, un dispositif de ce type comprenant un double pulseur alimenté, d'une part, par un flux d'air extérieur prélevé hors de l'habitacle et, d'autre part, par un flux d'air recirculé prélevé à l'intérieur de l'habitacle. Ce dispositif permet ainsi de traiter le flux d'air extérieur pour l'envoyer dans une région de l'habitacle, par exemple en partie supérieure, et de traiter le flux d'air recirculé pour l'envoyer dans une autre région de l'habitacle, par exemple en partie inférieure.

Toutefois, les performances d'un tel dispositif sont limitées du fait qu'il n'utilise qu'un seul pulseur et que les modes de fonctionnement sont réduits. En fait, ce dispositif connu ne permet pas de réaliser une gestion séparée entre les deux régions de l'habitacle, à savoir la partie supérieure et la partie inférieure.

On connaît aussi, d'après US-A-5 309 731, un dispositif de chauffage et/ou de climatisation de l'habitacle d'un véhicule automobile, du type comprenant des moyens pulseurs propres à envoyer un flux d'air au travers d'un boîtier logeant au moins un échangeur de chaleur et communiquant avec une sortie dégivrage, une sortie aération et une sortie pieds, les moyens pulseurs comprenant un premier pulseur propre à envoyer un premier flux d'air au travers d'une première partie d'un radiateur de chauffage et un deuxième pulseur propre à envoyer un deuxième flux d'air au travers d'une deuxième partie de ce radiateur, le premier pulseur et le deuxième pulseur étant deux pulseurs indépendants.

Toutefois, le dispositif selon US-A-5 309 731 présente les mêmes inconvénients que ceux mentionnés précédemment.

L'invention a notamment pour but de surmonter les inconvénients précités.

Elle vise principalement à procurer un dispositif capable de générer deux flux d'échange thermique indépendants, l'un destiné à la partie supérieure de l'habitacle et l'autre à la partie inférieure de l'habitacle, afin notamment de s'affranchir des problèmes d'embuage des vitres du véhicule.

Elle propose à cet effet un dispositif de chauffage et/ou de climatisation du type connu par US-A-5 309 731, dans lequel un moyen de répartition monté pivotant est prévu dans le boîtier, en amont du radiateur par rapport au deuxième flux d'air, pour contrôler le premier flux d'air et/ou le deuxième flux d'air au travers du radiateur, et dans lequel des moyens de distribution sont prévus pour répartir le premier et le deuxième flux d'air, ayant traversé le radiateur, entre la sortie dégivrage, la sortie aération et la sortie pieds. Ainsi, le dispositif de l'invention comprend deux pulseurs indépendants propres à générer deux flux d'air séparés destinés à être envoyés dans deux parties de l'habitacle, c'est-à-dire généralement la partie supérieure et la partie inférieure.

De ce fait, il est possible de distribuer vers les parties supérieure et inférieure de l'habitacle, deux flux d'air traités indépendamment en température.

Le moyen de répartition permet de contrôler, proportionner et/ou stratifier le premier flux d'air et le deuxième flux d'air qui traversent le radiateur. Il en résulte un réglage de la proportion du premier flux d'air et du deuxième flux d'air, sans mélange de ces deux flux d'air. Il est possible dans certains de faire traverser le radiateur soit par le premier flux d'air seul, soit par le deuxième flux d'air seul.

Dans une forme de réalisation préférée de l'invention, un évaporateur est interposé entre le premier pulseur et le radiateur, en sorte que le premier flux d'air traverse successivement l'évaporateur et le radiateur, tandis que le deuxième flux d'air traverse seulement le radiateur.

Ainsi, le premier flux d'air peut être refroidi et/ou réchauffé, tandis que le deuxième flux d'air peut être seulement réchauffé.

Selon une autre caractéristique de l'invention, le premier pulseur et le deuxième pulseur sont propres à être alimentés chacun par un flux d'air extérieur et/ou un flux d'air recirculé.

De préférence, le premier pulseur est propre à être alimenté par un flux d'air extérieur et/ou un flux d'air recirculé, tandis que le deuxième pulseur est propre à être alimenté par un flux d'air recirculé.

Selon une autre caractéristique de l'invention, la première partie du radiateur est en partie haute et est située du côté de la sortie dégivrage et de la sortie aération, tandis que la deuxième partie du radiateur est en partie basse et est située du côté de la sortie pieds.

De manière préférentielle, la sortie dégivrage et la sortie aération peuvent être alimentées par un flux d'air ayant traversé l'évaporateur (le cas échéant), et le radiateur, tandis que la sortie pieds est alimentée par un flux d'air ayant traversé la deuxième partie du radiateur, sans avoir traversé l'évaporateur.

Dans une forme de réalisation de l'invention, le premier pulseur et le deuxième pulseur sont disposés tous deux d'un même côté, ou côté amont, du radiateur, tandis que les sorties dégivrage, aération et pieds communiquent avec une chambre de sortie située du côté opposé, ou côté aval, du radiateur, en sorte que le premier flux d'air et le deuxième flux d'air traversent le radiateur dans la même direction.

Dans cette forme de réalisation, la chambre de sortie loge avantageusement un volet de distribution propre à prendre au moins deux positions différentes : une position de fermeture en laquelle la chambre de sortie est divisée en un premier compartiment et un second compartiment en sorte que le premier flux d'air est dirigé vers la sortie dégivrage et la sortie aération alors que le deuxième flux d'air est dirigé vers la sortie pieds ; et une position d'ouverture en laquelle le premier compartiment et le deuxième compartiment communiquent en sorte que le premier flux d'air et le deuxième flux d'air peuvent au moins en partie se mélanger.

Le moyen de répartition précité comprend avantageusement un volet de répartition prévu en sortie du deuxième pulseur pour contrôler le deuxième flux d'air.

Ce volet de répartition est de préférence propre à prendre une position de fermeture en laquelle la sortie du deuxième pulseur est fermée et au moins une position d'ouverture en laquelle la sortie du deuxième pulseur est ouverte.

Dans une autre forme de réalisation de l'invention, le premier pulseur est disposé d'un côté, ou côté amont, du radiateur tandis que le deuxième pulseur est disposé de l'autre côté, ou côté aval, du radiateur, et les sorties dégivrage et aération communiquent avec une chambre de sortie située du côté aval du radiateur, tandis que la sortie pieds communique avec une partie inférieure du boîtier du côté amont du radiateur, en sorte que le premier flux d'air et le deuxième flux d'air traversent le radiateur dans des directions opposées.

Cette forme de réalisation permet de disposer le premier et le deuxième pulseur respectivement en amont et en aval du radiateur.

Dans cette forme de réalisation, un volet de répartition est avantageusement prévu en sortie du deuxième pulseur pour contrôler le deuxième flux d'air et éviter ainsi un mélange entre le premier flux d'air et le deuxième flux d'air.

De préférence, ce volet de répartition est propre à prendre au moins deux positions : une position de fermeture en laquelle la sortie du deuxième pulseur est fermée et une position d'ouverture en laquelle la sortie du deuxième pulseur est ouverte.

Ce volet de répartition est avantageusement situé du côté amont du radiateur.

Dans la forme de réalisation précitée, on peut prévoir que le premier pulseur et le deuxième pulseur sont situés adjacents au boîtier.

On peut prévoir également, en variante, que le premier pulseur est situé adjacent au boîtier, tandis que le deuxième pulseur est situé à distance du boîtier, en particulier près des places arrière du véhicule.

Cette dernière solution permet d'accroître la compacité du dispositif et aussi de prélever de l'air recirculé à l'arrière de l'habitacle.

Le radiateur du dispositif de l'invention peut être propre à être traversé par un fluide chaud sous le contrôle d'un robinet de réglage de débit, selon la technique dite du "réglage sur l'eau".

En variante, le boîtier délimite une branche de réchauffage d'air dans laquelle est logé le radiateur et une branche de transmission d'air froid, et il est prévu un volet de mixage à la jonction des deux branches précitées pour assurer la répartition du flux d'air entre les deux branches et régler la température du flux d'air à envoyer vers les sorties dégivrage et aération. Ainsi, le réglage de la température s'effectue par la technique dite du "réglage sur l'air".

Selon une autre caractéristique de l'invention, le dispositif comprend un passage d'air supérieur prévu dans le boîtier près de la première partie du radiateur et communiquant avec une chambre de sortie en aval du radiateur, ce passage d'air supérieur étant contrôlé par un volet de sorte qu'une fraction du premier flux d'air puisse emprunter le passage d'air supérieur sans traverser le radiateur. Le volet permet alors de mixer l'air en partie supérieure du boîtier.

Selon encore une autre caractéristique de l'invention, le dispositif comprend un passage d'air inférieur prévu dans le boîtier près de la deuxième partie du radiateur et près de la sortie pieds et communiquant avec une chambre de sortie en aval du radiateur, ce passage d'air inférieur étant contrôlé par au moins un volet de sorte qu'une fraction du deuxième flux d'air puisse emprunter le passage d'air supérieur sans traverser le radiateur. Le volet permet alors de mixer l'air en partie inférieure du boîtier.

Conformément à l'invention, on peut utiliser soit un radiateur unique, soit un radiateur formé par la réunion de deux radiateurs adjacents propres à être traversés respectivement par le premier flux d'air et le deuxième flux d'air.

L'invention prévoit également, dans une variante, un radiateur additionnel situé en regard de la deuxième partie du radiateur et propre à être traversé aussi par le deuxième flux d'air.

Ceci permet d'augmenter le réchauffage du deuxième flux d'air et, par conséquent, le chauffage de la partie inférieure de l'habitacle.

Dans la description qui suit, faite seulement à titre d'exemple, on se réfère aux dessins annexés, sur lesquels :
- la figure 1 est une vue schématique en coupe d'un dispositif de chauffage et/ou climatisation de l'habitacle d'un véhicule automobile, selon une première forme de réalisation de l'invention ;
- la figure 2 est une vue partielle correspondant à la figure 1 dans une variante de réalisation ;
- la figure 3 est une autre vue partielle correspondant à la figure 1 dans une autre variante de réalisation ;
- la figure 4 est une vue en coupe d'un dispositif selon une deuxième forme de réalisation de l'invention ;
- la figure 5 est une vue en coupe d'un dispositif selon une troisième forme de réalisation de l'invention ;
- la figure 6 est une vue en coupe d'un dispositif selon une quatrième forme de réalisation de l'invention ;
- la figure 7 est une vue en coupe d'un dispositif selon une cinquième forme de réalisation de l'invention ;
- la figure 8 est une vue de côté d'un dispositif selon une sixième forme de réalisation de l'invention ;
- la figure 9 est un détail de la figure 8 dans une variante de réalisation ;
- la figure 10 est une vue en coupe d'un dispositif selon une septième forme de réalisation de l'invention ;
- la figure 11 est un détail de la figure 10 dans une variante de réalisation ;
- la figure 12 est une vue en coupe d'un dispositif selon une huitième forme de réalisation de l'invention ;
- la figure 13 est une vue en coupe d'un dispositif à deux mono-pulseurs selon une première forme de réalisation de l'invention ;
- la figure 14 est une vue de dessus du dispositif de la figure 13 ;
- la figure 15 est une vue en coupe d'un dispositif à deux mono-pulseurs selon une deuxième forme de réalisation de l'invention ;
- la figure 16 est une vue de dessus du dispositif de la figure 15 ;
- la figure 17 est un détail de la figure 16 dans une variante de réalisation ;
- la figure 18 est une vue en coupe d'un dispositif à deux mono-pulseurs selon une troisième forme de réalisation de l'invention ;
- la figure 19 est une vue en coupe d'un dispositif à deux mono-pulseurs selon une quatrième forme de réalisation de l'invention ;
- la figure 20 est une vue en coupe d'un dispositif à double pulseur selon une première forme de réalisation de l'invention ;
- la figure 21 est une vue de dessus du dispositif de la figure 20 ;
- la figure 22 est une vue en coupe d'un dispositif à double pulseur selon une deuxième forme de réalisation de l'invention ;
- la figure 23 est une vue en coupe selon la ligne XXIII-XXIII de la figure 22 ;
- la figure 24 est une vue en coupe d'un dispositif du type à réglage de température par mixage sur l'air selon une première forme de réalisation de l'invention ;
- la figure 25 est un détail de réalisation de la figure 24 dans une variante ;
- la figure 26 est un détail de réalisation de la figure 24 dans une autre variante ;
- la figure 27 est un détail de réalisation de la figure 24 dans une autre variante ;
- la figure 28 est une vue en coupe d'un dispositif à réglage de température par mixage sur l'air selon une deuxième forme de réalisation de l'invention ;
- la figure 29 est une vue en coupe d'un dispositif selon l'invention à deux radiateurs ;
- la figure 30 est une vue en coupe d'un dispositif analogue à celui de la figure 29, comprenant un seul radiateur et un radiateur additionnel ;
- les figures 31A à 31C montrent différentes configurations d'un dispositif selon l'invention du type à mixage sur l'air;
- les figures 32A à 32D montrent différentes configurations d'un autre dispositif selon l'invention à réglage sur l'air; et
- les figures 33A à 33C montrent différentes configurations d'un autre dispositif selon l'invention à réglage sur l'air.

Sur ces figures, les éléments communs sont désignés par les mêmes références.

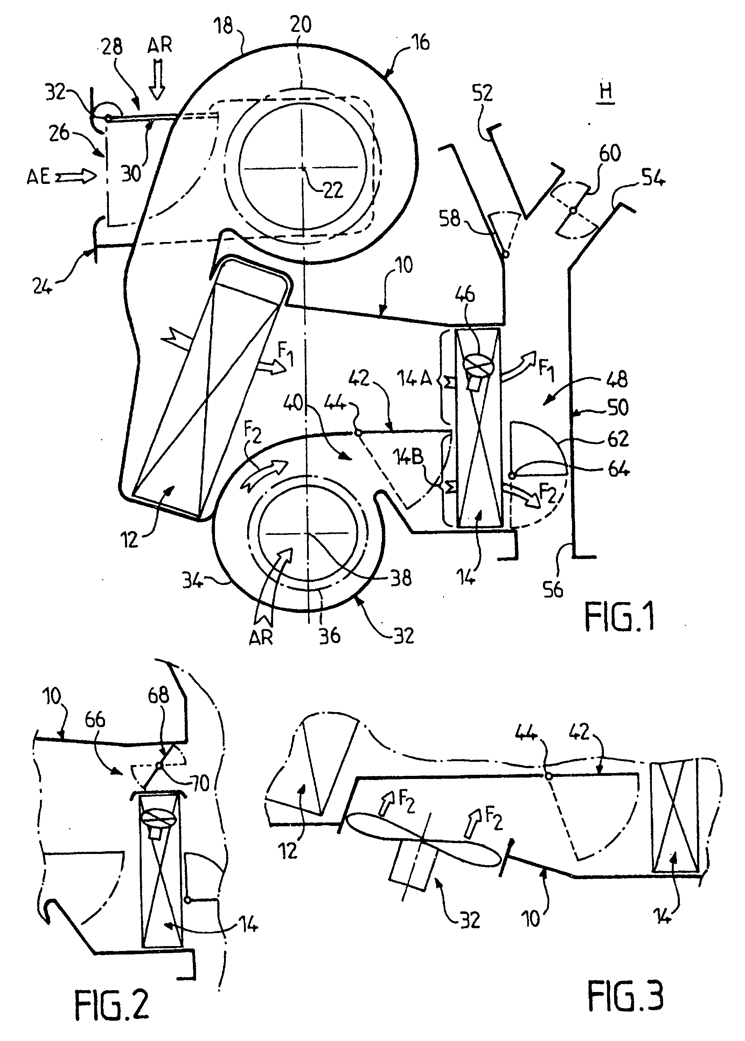

On se réfère tout d'abord à la figure 1 qui représente un dispositif de chauffage et/ou de climatisation de l'habitacle H d'un véhicule automobile, comprenant un boîtier 10 logeant un évaporateur 12 et un radiateur de chauffage 14, respectivement du côté entrée et du côté sortie du boîtier. L'entrée du boîtier est reliée à un premier pulseur 16 de type radial possédant une enveloppe 18 en forme de volute dans laquelle peut tourner une hélice 20 autour d'un axe 22.

Le pulseur 16 est relié à un boîtier d'alimentation 24 muni de deux entrées 26 et 28 contrôlées par un volet 30 du type drapeau monté pivotant autour d'un axe 32. Les entrées 26 et 28 sont propres à être alimentées respectivement par un flux d'air extérieur AE prélevé à l'extérieur de l'habitacle H, tandis que l'entrée d'air 28 est propre à être alimentée par un flux d'air recirculé AR prélevé à l'intérieur de l'habitacle. Ainsi, en fonction de la position occupée par le volet 30, le pulseur 16 peut envoyer soit un flux d'air extérieur AE, soit un flux d'air recirculé AR au travers de l'évaporateur 12. Ce dernier est relié à un circuit classique de climatisation (non représenté).

Le dispositif comprend en outre un deuxième pulseur 32, également de type radial, alimenté ici par un flux d'air recirculé AR. Le pulseur comprend une enveloppe 34 en forme de volute dans laquelle tourne une hélice 36 autour d'un axe 38 parallèle à l'axe 22. L'enveloppe 34 comporte une sortie 40 qui débouche dans le boîtier 10, en regard du radiateur 14. La sortie 40 est contrôlée par un volet de réglage 42 du type drapeau, monté pivotant autour d'un axe 44 et propre à se déplacer entre une position de fermeture (représentée en trait interrompu) en laquelle la sortie 40 est fermée et une position d'ouverture (représentée en trait plein) en laquelle la sortie 40 est ouverte.

Le premier pulseur 16 est propre à produire un flux d'air F1 qui traverse successivement l'évaporateur 12 et une partie supérieure ou partie haute 14A du radiateur, tandis que le deuxième pulseur 32 est propre à produire un deuxième flux d'air F2 qui traverse une partie inférieure ou partie basse 14B du radiateur 14.

Ainsi, le premier flux d'air F1 peut être successivement refroidi et réchauffé, tandis que le deuxième flux d'air F2 peut être seulement réchauffé.

Le radiateur 14 est propre à être traversé par un fluide chaud, habituellement le liquide de refroidissement du moteur du véhicule. Un robinet de réglage 46 permet de régler, de façon progressive, le débit du fluide chaud traversant le radiateur et, par conséquent, la température du flux d'air F1 ou F2 en sortie du radiateur.

Ces deux flux débouchent dans une chambre de sortie 48 formée à l'intérieur d'un boîtier de distribution 50 qui est relié, en partie supérieure, à une sortie dégivrage 52 et à une sortie aération 54 et, en partie inférieure, à une sortie pieds 56.

La sortie 52 est propre à alimenter au moins une buse de dégivrage/désembuage du pare-brise (non représentée), tandis que la sortie 54 est propre à alimenter au moins un aérateur (non représenté) prévu sur la planche de bord du véhicule.

La sortie 52 est contrôlée par un volet pivotant 58 du type drapeau, tandis que la sortie 54 est contrôlée par un volet pivotant 60 du type papillon.

Dans cette forme de réalisation, les pulseurs 16 et 32 sont disposés tous deux du même côté, ou côté amont, du radiateur 14 et les différentes sorties 52, 54 et 56 communiquent toutes avec la chambre de sortie 48, qui est située du côté aval du radiateur. Il en résulte que les flux d'air F1 et F2 traversent le radiateur 14 dans la même direction.

La chambre de sortie 48 loge un volet de distribution 62, dans l'exemple du type tambour, monté pivotant autour d'un axe 64. Ce volet 62 est propre à prendre au moins deux positions différentes :
- une première position (représentée en trait interrompu) dans laquelle les flux F1 et/ou F2 sont dirigés vers la sortie dégivrage 52 et la sortie aération 54, et
- une deuxième position (représentée en trait plein) dans laquelle les flux F1 et/ou F2 sont dirigés vers la sortie pieds 56.

Dans la variante de réalisation de la figure 2, le dispositif comprend en outre un passage d'air supérieur 66 prévu dans le boîtier près de la première partie 14A du radiateur et communiquant avec la chambre de sortie 48 qui est située en aval du radiateur. Ce passage d'air supérieur 66 est contrôlé par un volet 68 du type papillon monté pivotant autour d'un axe 70. Lorsque le volet 68 est au moins en partie ouvert, une fraction du flux F1 emprunte le passage 66 sans traverser le radiateur 14, ce qui permet de régler la température du flux d'air F1 dans la chambre de sortie 48 en mélangeant, en proportions réglables, un flux d'air chaud et un flux d'air frais. Ce réglage de température s'effectue ainsi par la technique dite du "réglage sur l'air".

Le dispositif selon la variante de la figure 3 diffère de celui de la figure 1 par le fait que le pulseur 32 est ici un pulseur axial, si bien que le flux F2 est envoyé parallèlement à l'axe de l'hélice et non pas tangentiellement comme dans le cas d'un pulseur radial. Le pulseur 32 ne comporte donc pas d'enveloppe du type volute.

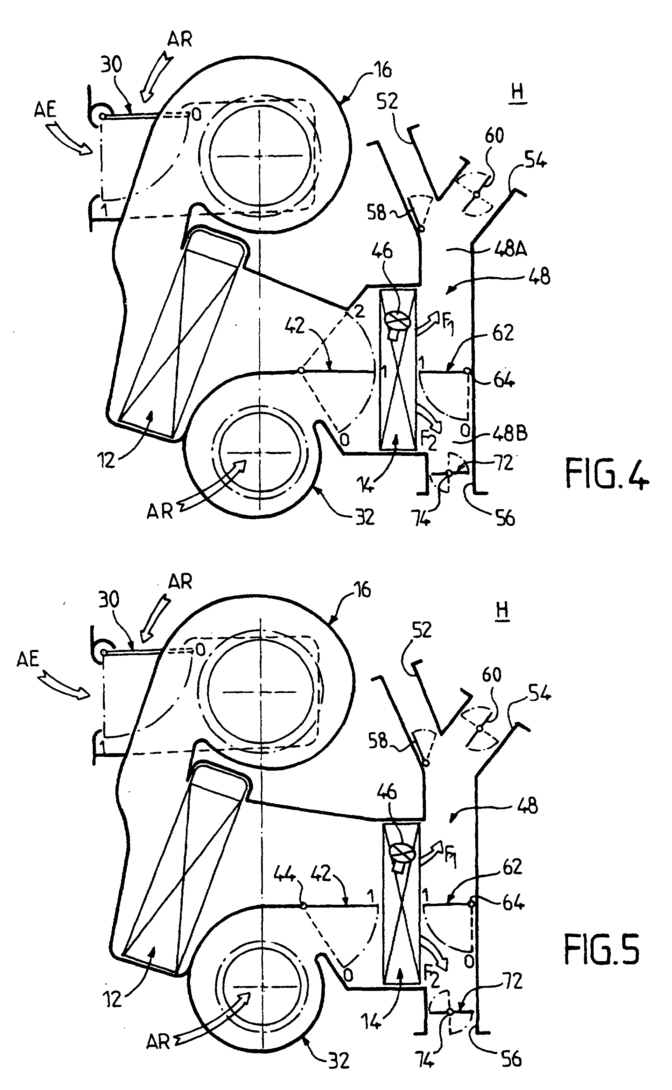

Le dispositif représenté à la figure 4 s'apparente à celui de la figure 1. Toutefois, le volet 42 peut prendre ici trois positions différentes :
- position 0 dans laquelle la sortie 40 du pulseur 32 est fermée ;
- position 1 dans laquelle la sortie 40 est ouverte et le volet 42 permet de cloisonner les flux F1 et F2 en sorte qu'ils traversent respectivement les parties 14A et 14B du radiateur ; et
- position 2 dans laquelle le volet 42 est complètement ouvert et permet au flux F2 de traverser les parties 14A et 14B du radiateur (dans cette position le flux F1 ne peut accéder au radiateur 14).

Par ailleurs, le volet 62 est ici constitué par un volet pivotant du type drapeau qui peut prendre deux positions :
- position 0 dans laquelle la chambre de sortie 48 alimente les sorties 52, 54 et 56 ; et
- position 1 dans laquelle la chambre de sortie 48 est divisée en un premier compartiment (compartiment supérieur) 48A communiquant avec les sorties 52 et 54 et un deuxième compartiment (compartiment inférieur) 48B communiquant avec la sortie 56. En outre, cette sortie peut être elle-même contrôlée par un volet 72 du type papillon monté pivotant autour d'un axe 74.

Sur la figure 4, le volet 30 peut prendre deux positions :
- position 0, ou "position air extérieur", et
- position 1, ou "position air recirculé".

Le tableau 1 qui suit donne, à titre d'exemple, différents modes de distribution possibles selon les positions respectives des volets 42, 62 et 30 et selon le mode de fonctionnement des pulseurs 16 et 32. Pour ces derniers, les chiffres 0 et 1 correspondent respectivement à un mode d'arrêt et de fonctionnement.

**Tableau 1**

| **Modes de distribution** | **Volet 42** | **Volet 62** | **Volet 30** | **Pulseur 16** | **Pulseur 32** |
|---|---|---|---|---|---|
| Dégivrage | 0 | 0 | 0 | 1 | 0 |
| Dégivrage + Chauffage | 1 | 1 | 0 | 1 | 1 |
| Chauffage | 2 | 0 | 0 ou 1 | 0 | 1 |
| Chauffage + Aération | 1 | 1 | 0 | 1 | 1 |
| Aération | 0 | 0 | 0 ou 1 | 1 | 0 |

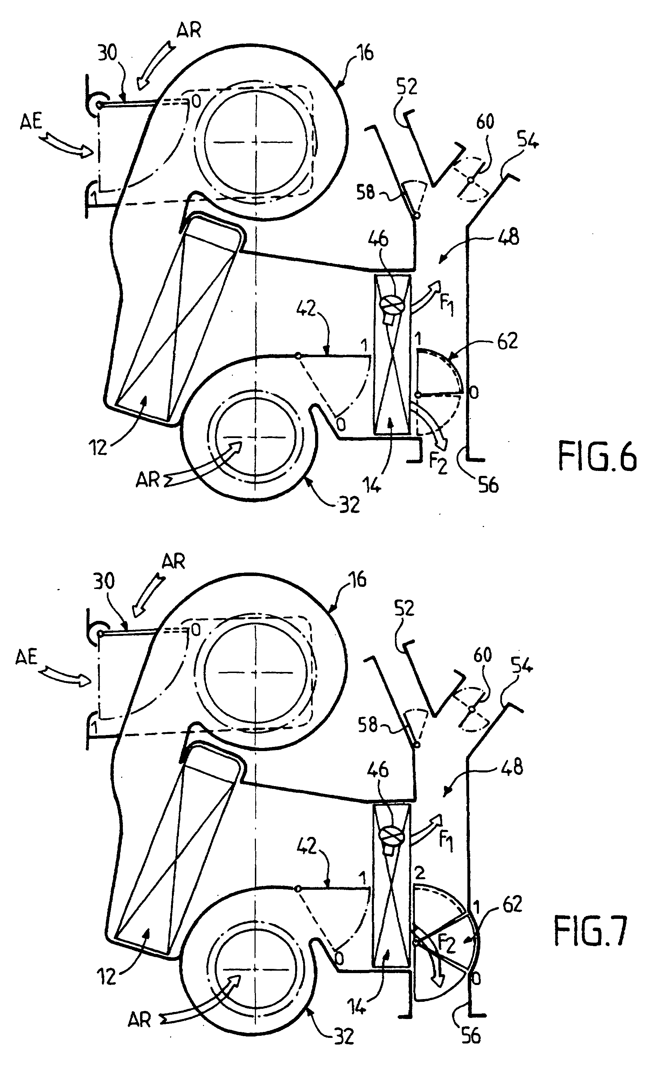

Le dispositif représenté à la figure 5 s'apparente à celui des figures 1 et 4. Dans cette forme de réalisation, le volet 42 peut prendre deux positions 0 et 1 comme dans le cas de la figure 1. Il ne peut pas prendre la position 2 de pleine ouverture comme dans le cas de la figure 4. Le volet 62 est également un volet du type drapeau analogue à celui de la figure 4 et pouvant prendre deux positions différentes : 0 et 1.

Le tableau 2 qui suit donne, à titre d'exemple, différents modes de distribution en fonction de la position des volets 42, 62 et 30 et des pulseurs 16 et 32.

**Tableau 2**

| **Modes de distribution** | **Volet 42** | **Volet 62** | **Volet 30** | **Pulseur 16** | **Pulseur 32** |
|---|---|---|---|---|---|
| Dégivrage | 0 | 0 | 0 | 1 | 0 |
| Dégivrage + Chauffage | 1 | 1 | 0 | 1 | 1 |
| Chauffage | 0 | 0 | 0 ou 1 | 1 | 0 |
| Chauffage + Aération | 1 | 1 | 0 | 1 | 1 |
| Aération | 0 | 0 | 0 ou 1 | 1 | 0 |

Le dispositif représenté à la figure 6 s'apparente à celui de la figure 1. Les positions respectives des volets 42, 62 et 30 sont désignées par les chiffres 0 et 1.

Le tableau 3 qui suit donne, à titre d'exemple, différents modes de distribution en fonction des positions respectives des volets et des modes de fonctionnement des deux pulseurs.

**Tableau 3**

| **Modes de distribution** | **Volet 42** | **Volet 62** | **Volet 30** | **Pulseur 16** | **Pulseur 32** |
|---|---|---|---|---|---|
| Dégivrage | 0 | 0 | 0 | 1 | 0 |
| Dégivrage + Chauffage | 1 | 1 | 0 | 1 | 1 |
| Chauffage | 0 | 1 | 0 ou 1 | 0 | 1 |
| Chauffage + Aération | 1 | 1 | 0 | 1 | 1 |
| Aération | 0 | 0 | 0 ou 1 | 1 | 0 |

Le dispositif de la figure 7 s'apparente étroitement à celui de la figure 6 et diffère de ce dernier par le fait que le volet 62, également du type tambour, peut assumer trois positions différentes :
- position 0 en laquelle la sortie pieds 56 est isolée de la chambre de sortie 48 ;
- position 1 en laquelle les sorties 52, 54 et 56 communiquent toutes avec la chambre de sortie 48 ; et
- position 2 en laquelle les sorties 52 et 54 communiquent avec une partie supérieure de la chambre de sortie 48 alors que la sortie pieds 56 communique avec une partie inférieure de la chambre de sortie 48.

Le tableau 4 qui suit donne, à titre d'exemple, différents modes de distribution du dispositif en fonction des positions respectives des volets et des modes de fonctionnement des pulseurs.

**Tableau 4**

| **Modes de distribution** | **Volet 42** | **Volet 62** | **Volet 30** | **Pulseur 16** | **Pulseur 32** |
|---|---|---|---|---|---|
| Dégivrage | 0 | 0 | 0 | 1 | 0 |
| Dégivrage + Chauffage | 1 | 2 | 0 | 1 | 1 |
| Chauffage | 1 | 1 | 0 ou 1 | 1 | 0 |
| Chauffage + Aération | 1 | 2 | 0 | 1 | 1 |
| Aération | 0 | 0 | 0 ou 1 | 1 | 0 |

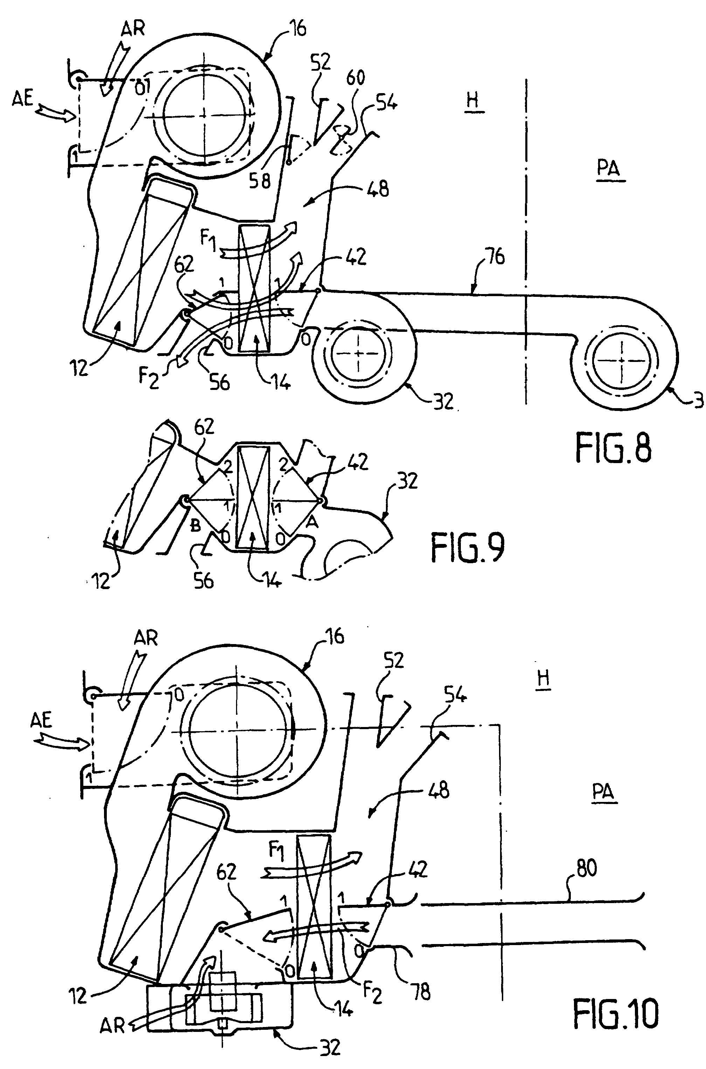

Le dispositif de la figure 8 diffère quelque peu des dispositifs précédents.

Comme dans les formes de réalisation précédentes, le premier pulseur 16 est disposé du côté amont du radiateur. Par contre, le deuxième pulseur 32 est disposé de l'autre côté, c'est-à-dire le côté aval, du radiateur. Les sorties dégivrage 52 et aération 54 communiquent toutes les deux avec la chambre de sortie 48. Par contre, la sortie pieds 56 communique avec une partie inférieure du boîtier 10 du côté amont du radiateur. Il en résulte que le premier flux d'air F1 et le deuxième flux d'air F2 traversent le radiateur, c'est-à-dire respectivement ses parties 14A et 14B dans des directions opposées.

Comme dans les formes de réalisation précédentes, un volet 42 du type drapeau monté pivotant autour d'un axe 44 est prévu à la sortie du pulseur 32. Toutefois, ce volet 42 est ici situé en aval du radiateur 14, c'est-à-dire du côté de la chambre de sortie 48. Ce volet 42 peut prendre deux positions différentes :
- une position 0 dans laquelle la sortie du pulseur 32 est fermée ; et
- une position 1 dans laquelle la sortie du pulseur est ouverte et le volet permet de canaliser le flux F2 pour qu'il traverse la partie inférieure 14B du radiateur 14.

En outre, le dispositif comprend un volet 62 analogue à celui des formes de réalisation précédentes, mais situé ici en amont du radiateur 14, c'est-à-dire entre l'évaporateur 12 et le radiateur 14. Le volet 62 est propre à contrôler la sortie pieds 56 et peut prendre deux positions différentes :
- position 0 en laquelle la sortie pieds 56 est fermée ; et
- position 1 en laquelle la sortie pieds 56 est ouverte et le flux F2 est canalisé vers cette sortie pieds 56.

Dans le cas de la figure 8, le pulseur 16 est situé adjacent au boîtier 10 et le deuxième pulseur 32 peut être situé adjacent au boîtier.

En variante, le deuxième pulseur peut être situé à distance du boîtier (voir partie droite de la figure 8) en particulier dans la zone des places arrière PA du véhicule. En ce cas, il faut prévoir un conduit de liaison 76 entre le pulseur 32 et le boîtier 10.

Le fait de disposer le pulseur 32 à distance du boîtier peut être intéressant pour augmenter la compacité du dispositif et en outre pour prélever de l'air recirculé dans la région des places arrière PA de l'habitacle.

Dans la variante de la figure 9, qui s'apparente à celle de la figure 8, le volet 42 peut occuper en outre une troisième position, ou position 2, en laquelle le flux F2 peut traverser complètement le radiateur 14. De même, le volet 62 peut occuper une troisième position, ou position 2, en laquelle le flux F2 qui a traversé tout le radiateur 14, peut être dirigé vers la sortie pieds 56.

Le tableau 5 qui suit donne, à titre d'exemple, différents modes de distribution pour le dispositif de la figure 8 ou de la figure 9.

**Tableau 5**

| **Modes de distribution** | **Volet 42** | **Volet 62** | **Volet 30** | **Pulseur 16** | **Pulseur 32** |
|---|---|---|---|---|---|
| Dégivrage | 0 | 0 | 0 | 1 | 0 |
| Dégivrage + Chauffage | 1 | 1 | 0 | 1 | 1 |
| Chauffage | 1(2) | 1(2) | 0 ou 1 | 0 | 1 |
| Chauffage + Aération | 1 | 1 | 0 | 1 | 1 |
| Aération | 0 | 0 | 0 ou 1 | 1 | 0 |

Le dispositif selon la figure 10 s'apparente à celui de la figure 8 en ce sens que les flux F1 et F2 traversent le radiateur suivant des directions opposées. Toutefois, le pulseur 32 est situé en amont du radiateur 14, c'est-à-dire près de l'évaporateur 12, et non pas en aval du radiateur 14 près du boîtier de distribution 50. Il en résulte que le pulseur 32 doit être du type aspirant et non du type refoulant. Le prélèvement du flux F2 s'effectue par une entrée d'air 78 qui est contrôlée par le volet 42 et qui débouche dans l'habitacle H soit au niveau des places avant, soit au niveau des places arrière PA, à condition, dans ce dernier cas, d'utiliser une conduite 80.

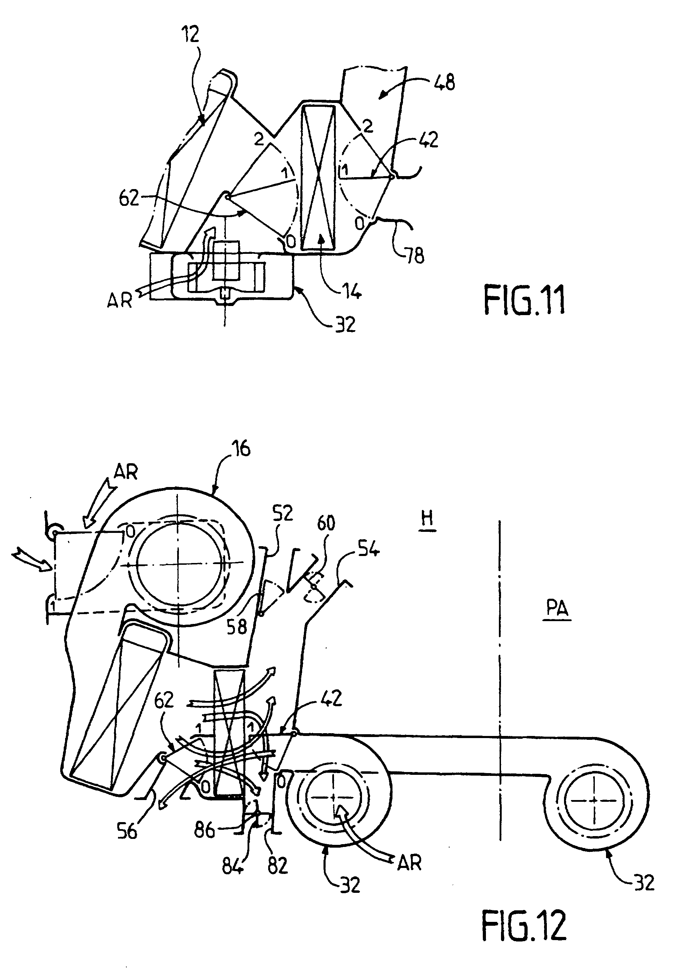

La variante de la figure 11 s'apparente à celle de la figure 9, en ce sens que les volets 42 et 62 peuvent occuper chacun trois positions différentes identifiées par les chiffres 0, 1 et 2.

Le dispositif représenté à la figure 12 s'apparente à celui de la figure 8. Il comporte en outre une deuxième sortie pieds 82 qui est située en aval du radiateur 14, dans la partie inférieure du boîtier de distribution 50. Cette sortie 82 est contrôlée par un volet 84 du type papillon monté pivotant autour d'un axe 86.

Le tableau 6 qui suit donne, à titre d'exemple, différents modes de distribution du dispositif de la figure 12.

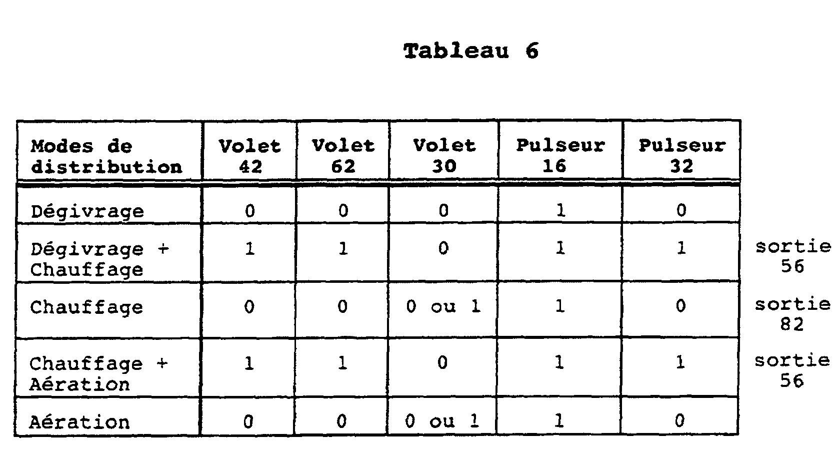

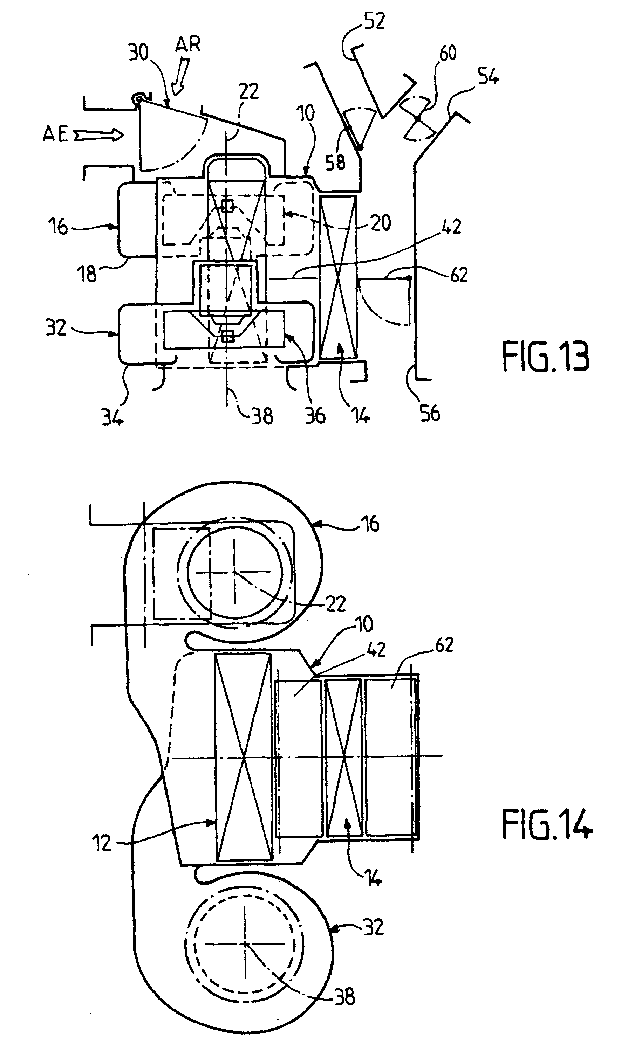

On décrira maintenant sommairement, en référence aux figures 13 à 19, différentes variantes d'implantation des pulseurs 16 et 32. Dans ces différentes variantes, on utilise deux mono-pulseurs indépendants, c'est-à-dire actionnés chacun par des moteurs électriques indépendants.

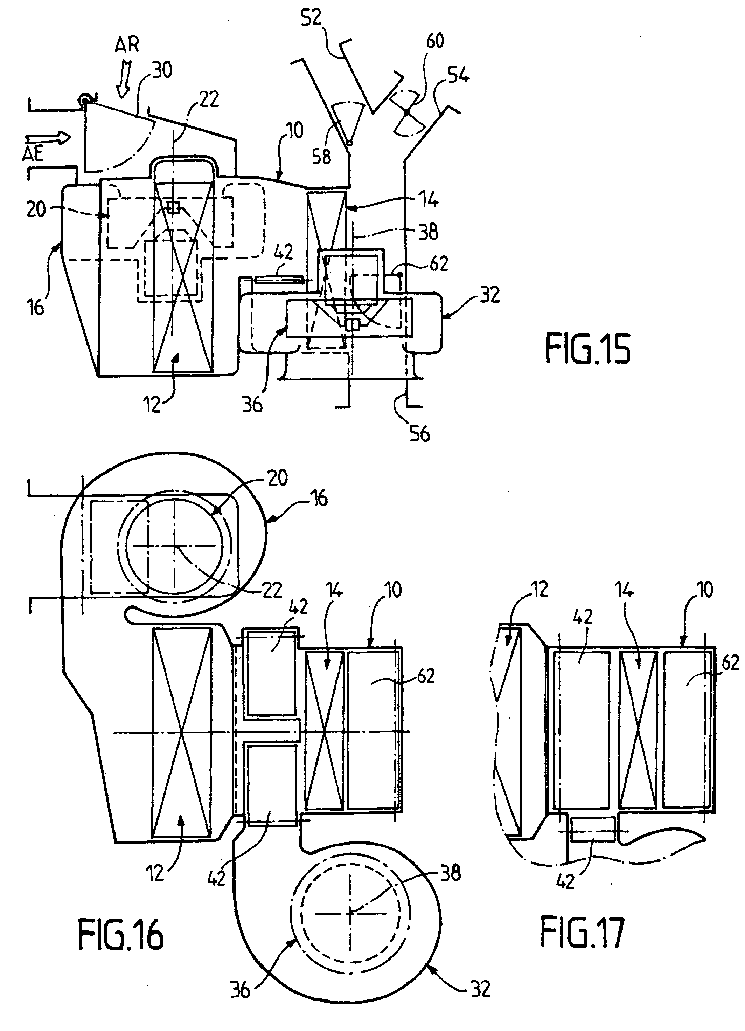

Dans la variante d'implantation des figures 13 et 14, les pulseurs 16 et 32 sont de type radial et ont leurs volutes respectives 18 et 34 situées de part et d'autre du boîtier. Les axes respectifs 22 et 38 des hélices sont parallèles entre eux. Le dispositif comprend un volet 42 du type drapeau et un volet 62 de type drapeau montés pivotants respectivement en amont et en aval du radiateur 14.

Dans la variante des figures 15 et 16, les pulseurs 16 et 32 sont également du type radial et sont disposés tête bêche avec les axes respectifs 22 et 38 des hélices, disposés sensiblement parallèlement. Les pulseurs 16 et 32 sont disposés de part et d'autre du boîtier, comme dans le cas de la figure 14. Toutefois, l'axe 22 du pulseur 16 est situé pratiquement dans le plan de l'évaporateur 12, alors que l'axe 38 du pulseur 16 est décalé par rapport au plan précité. En fait, la sortie du pulseur 16 débouche en amont de l'évaporateur 12, tandis que la sortie du pulseur 32 débouche directement dans le boîtier entre l'évaporateur 12 et le radiateur 14. Le dispositif comprend deux volets 42 de type drapeau montés pivotants en amont du radiateur 14 et un volet 62 de type drapeau monté pivotant en aval du radiateur 14. Les volets 42 ont des axes de pivotement parallèles et sont commandés en coordination de manière à se trouver ensemble en position ouverte et ensemble en position fermée. Dans la position ouverte des volets 42, les flux d'air provenant respectivement des pulseurs 16 et 32 sont canalisés et stratifiés à l'entrée du radiateur 14.

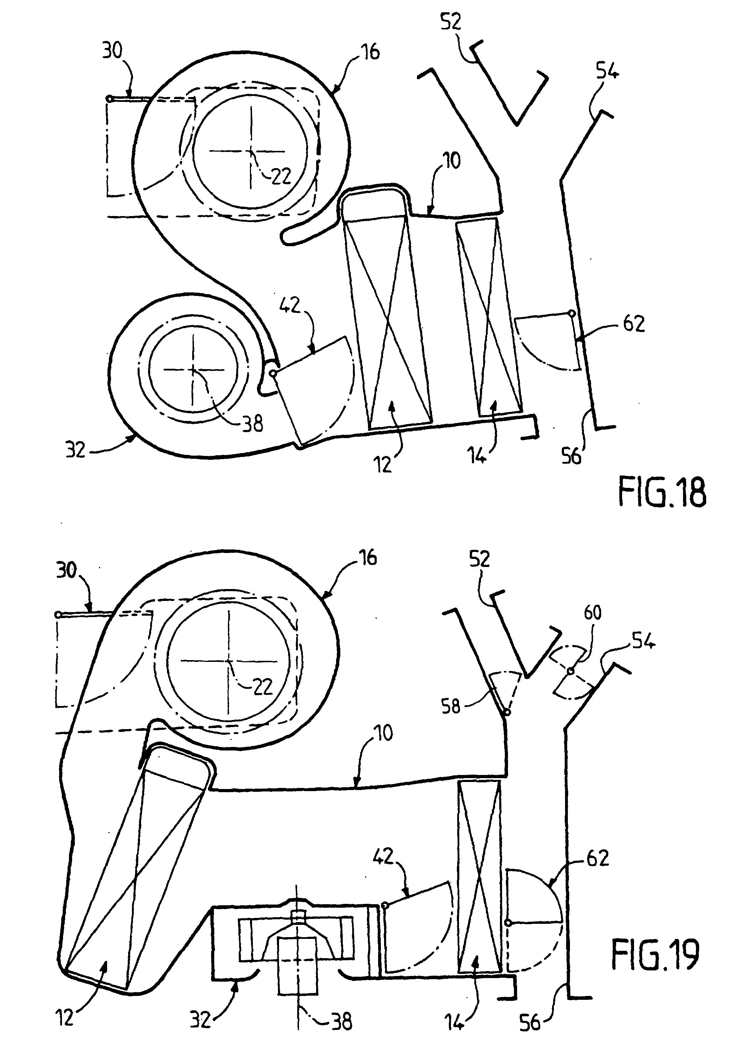

Dans la variante de la figure 17, la sortie du pulseur 32 débouche également entre l'évaporateur 12 et le radiateur 14, mais selon une configuration différente. Le dispositif comprend aussi deux volets 42 de type drapeau, mais ceux-ci ont des axes de pivotement disposés perpendiculairement entre eux.

Dans la forme de réalisation de la figure 18, les pulseurs 16 et 32 sont également du type radial et ont leurs enveloppes respectives 18 et 34 disposées adjacentes avec les axes respectifs 22 et 38 des hélices qui s'étendent parallèlement entre eux. Les volutes débouchent directement dans le boîtier 10 en amont de l'évaporateur 12.

Dans la forme de réalisation de la figure 19, les pulseurs 16 et 32 sont aussi du type radial. La volute 18 du pulseur 16 est située proche du boîtier 10 et communique directement à l'entrée de l'évaporateur 12. Le pulseur 32 est disposé près du boîtier entre l'évaporateur 12 et le radiateur 14. La volute 34 peut être intégrée dans le boîtier. Les axes respectifs 22 et 38 des hélices sont octogonaux.

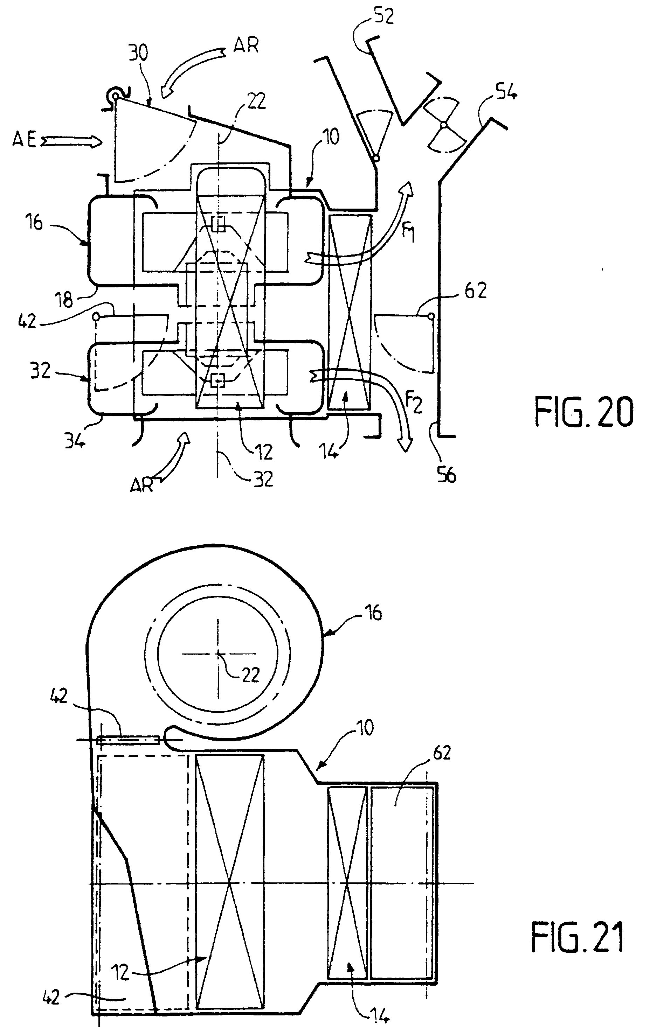

On décrira maintenant sommairement, en référence aux figures 20 à 23, différentes variantes d'implantation dans le cas de deux mono-pulseurs.

Dans la variante des figures 20 et 21, les volutes 18 et 34 des pulseurs 16 et 32 sont adjacentes, et les axes respectifs des hélices sont confondus. Les volutes 18 et 34 sont situées à proximité immédiate du boîtier 10.

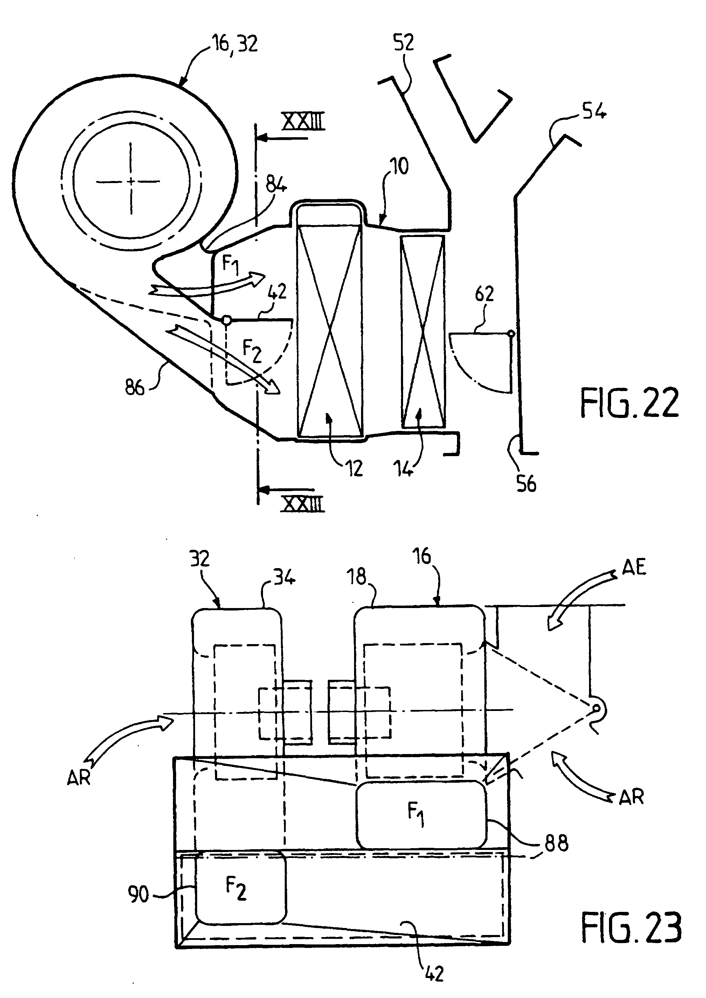

Dans la variante des figures 22 et 23, les volutes 18 et 34 sont situées à proximité immédiate du boîtier et comportent des conduits de sortie 84, 86 reliés en amont du boîtier 10 et propres à véhiculer respectivement le flux d'air F1 et le flux d'air F2. Comme on le voit sur la figure 23, les volutes 18 et 34 sont rattachées à une paroi latérale du boîtier 10 et elles ont des conduits de sortie respectifs 88 et 90 propres à véhiculer respectivement les flux d'air F1 et F2. Le dispositif comprend deux volets 42 placés en sortie des pulseurs et montés pivotants autour d'axes respectifs perpendiculaires entre eux.

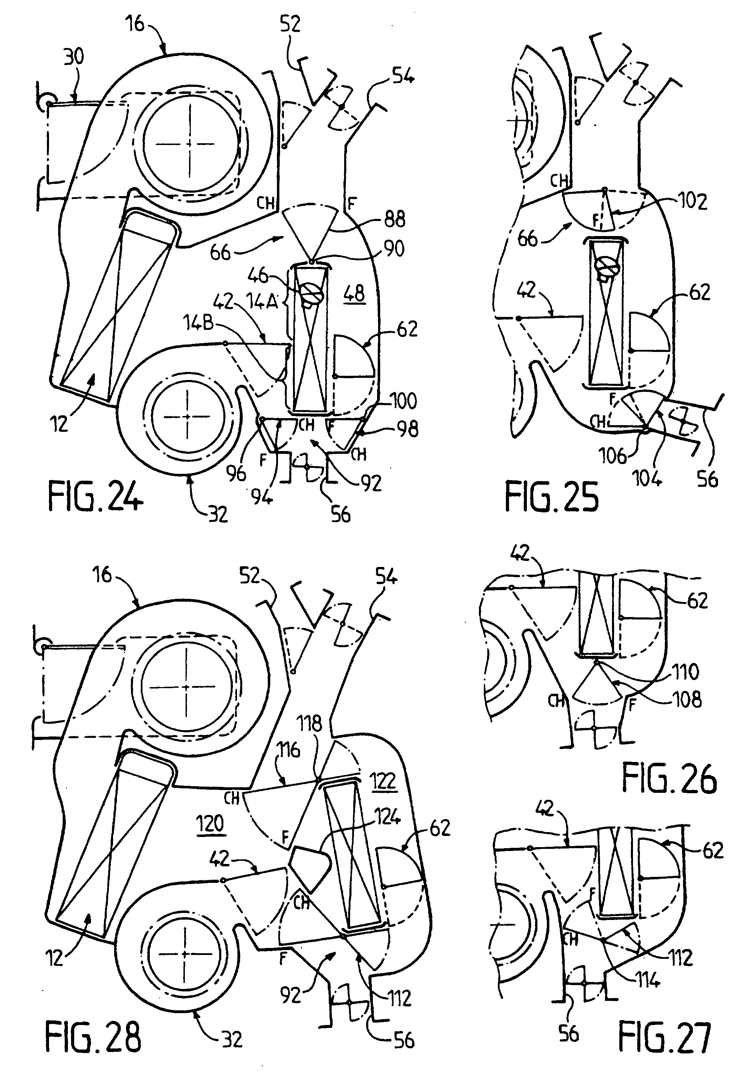

On se réfère maintenant aux figures 24 à 28 qui concernent des dispositifs du type à réglage de température par mixage sur l'air.

Le dispositif de la figure 24 s'apparente à celui de la figure 2, en ce sens que l'on retrouve également un passage d'air supérieur 66 prévu dans le boîtier près de la première partie 14A du radiateur et communiquant avec la chambre de sortie 48. Ce passage d'air est ici contrôlé par un volet 88 du type drapeau monté pivotant autour d'un axe 90. Ce volet peut occuper une position chaud "CH" dans laquelle le passage d'air supérieur 66 est fermé et le flux d'air F1 est obligé de traverser le radiateur 14 pour parvenir aux sorties 52 et 54. Il peut également occuper une position froid "F" dans laquelle le flux d'air F1 accède directement aux sorties 52 et 54 sans traverser le radiateur. Ce volet 88 peut occuper aussi des positions intermédiaires pour ajuster la température du flux d'air parvenant aux sorties 52 et 54.

Dans le cas de la figure 24, on retrouve également les volets 42 et 62 de la figure 2. Par ailleurs, le dispositif comprend un passage d'air inférieur 92 prévu dans le boîtier 10, près de la deuxième partie 14B du radiateur et près de la sortie pieds 56. Ce passage 92 communique également avec la chambre de sortie 48 prévue en aval du radiateur.

Ce passage d'air est contrôlé par deux volets, un volet 94 de type drapeau monté pivotant autour d'un axe 96 et un volet 98 également de type drapeau monté pivotant autour d'un axe 100.

Les volets 94 et 98 sont situés respectivement du côté amont et du côté aval du radiateur 14 et permettent notamment d'assurer un mixage de l'air en partie inférieure du boîtier.

Dans la variante de la figure 25, le passage d'air supérieur 66 est contrôlé par un volet 102 du type tambour qui joue sensiblement les mêmes fonctions que le volet 88 de la figure 24.

Le passage d'air inférieur 92 est contrôlé ici par un seul volet 104 à la place des deux volets 94 et 98 décrits précédemment. Ce volet 104 est monté pivotant autour d'un axe 106.

Dans la variante de la figure 26, le volet 104 est remplacé par un volet 108 de type drapeau monté pivotant autour d'un axe 110.

Dans la forme de réalisation de la figure 27, le passage d'air inférieur 92 est contrôlé par un volet 112 du type papillon monté pivotant autour d'un axe 114.

Dans la variante de la figure 28, on retrouve également un volet 112 de type papillon pour contrôler le passage d'air inférieur 92.

Le passage d'air supérieur 66 est contrôlé par un volet de mixage 116 monté pivotant autour d'un axe 118. Ce volet est situé à la jonction d'une branche de transmission d'air froid 120 et d'une branche de réchauffage d'air 122 dans laquelle est logé le radiateur 14. Ce volet permet d'ajuster la température de l'air parvenant aux sorties 52 et 54 par une technique de réglage sur l'air. Le volet 116 peut occuper une position froid "F" dans laquelle le flux d'air F1 est dirigé vers les sorties 52 et 54 sans pouvoir traverser le radiateur 14 et une position chaud "CH" dans laquelle le flux d'air est obligé de traverser le radiateur 14 pour parvenir aux sorties 52 et 54. Le volet 116 peut occuper une multiplicité de positions intermédiaires pour permettre de régler la température du flux d'air par mélange d'un flux d'air chaud et d'un flux d'air froid selon une technique en elle-même connue.

Le boîtier 10 loge intérieurement une butée 124 servant à limiter le déplacement du volet 112 et celui du volet 116.

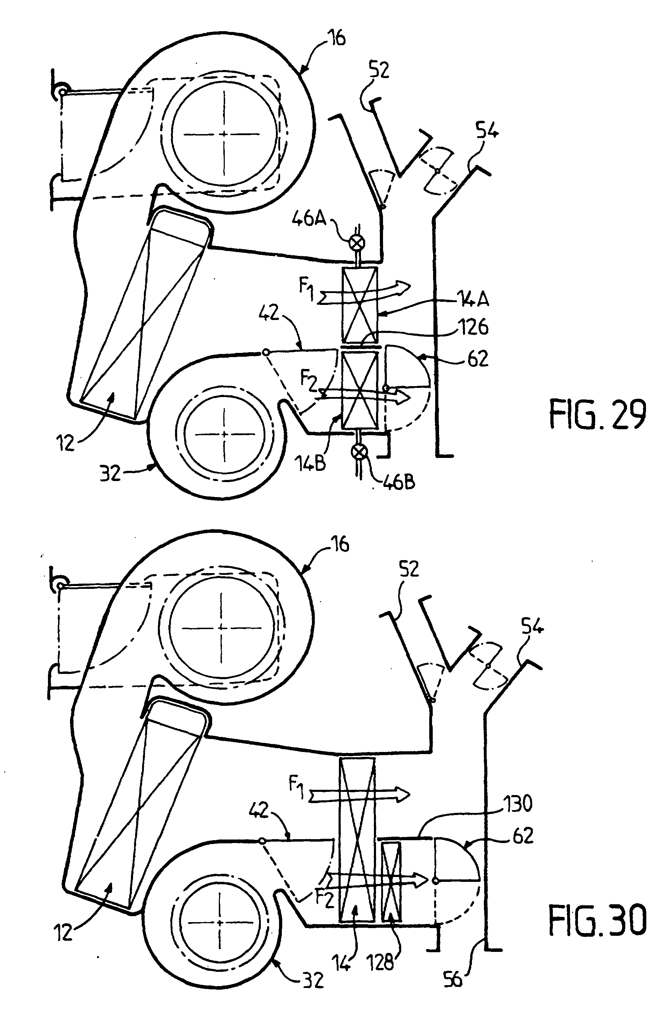

Le dispositif de la figure 29 s'apparente à celui de la figure 1 sauf que le radiateur 14 est formé par la réunion de deux radiateurs adjacents et indépendants 14A et 14B propres à être traversés respectivement par les flux F1 et F2. Ces deux radiateurs sont alimentés par un fluide chaud sous le contrôle de robinets 46A et 46B tous deux à réglage progressif. Une cloison 126 est prévue entre les radiateurs 14A et 14B pour contribuer à la séparation des flux F1 et F2.

Le dispositif de la figure 30 est similaire à celui de la figure 1, et il comprend en outre un radiateur additionnel 128 situé en regard de la deuxième partie 14A du radiateur et propre à être traversé aussi par le deuxième flux d'air F2. Ce radiateur est avantageusement de type électrique. Ceci permet d'augmenter la température du flux F2 et de favoriser la montée en température de la zone inférieure de l'habitacle, dans la région des pieds des passagers.

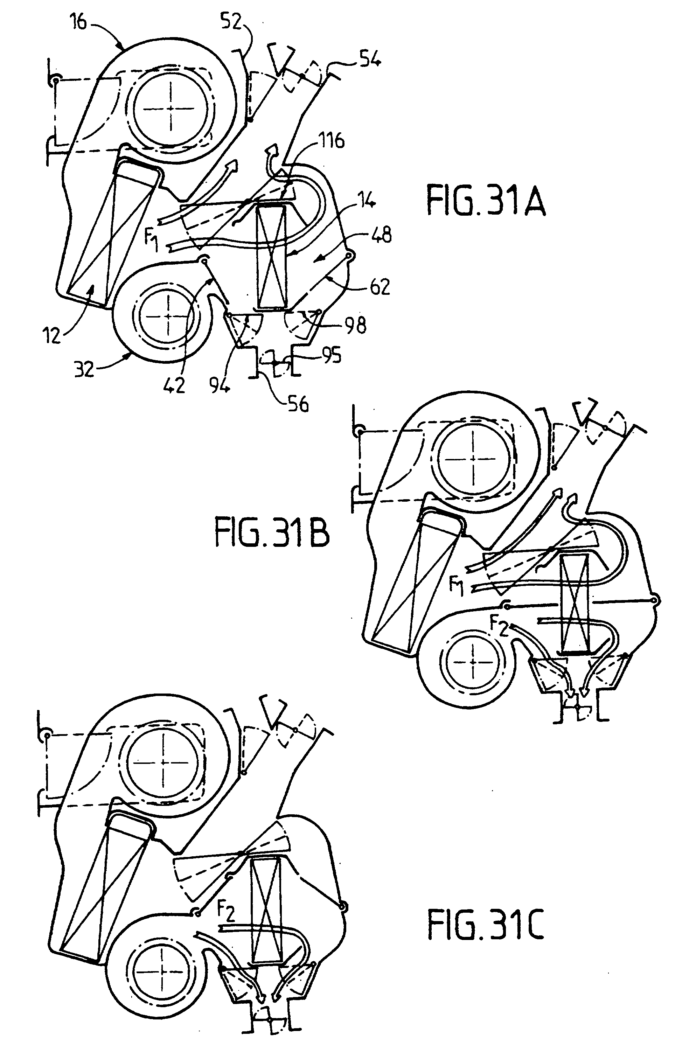

On se réfère maintenant aux figures 31A à 31C montrant différents modes de distribution d'un dispositif selon l'invention s'apparentant à ceux décrits aux figures 24 et 28. Le dispositif comprend notamment un passage d'air supérieur 66 dans lequel est placé un volet de mixage 116 et un passage d'air inférieur 92 dans lequel sont placés deux volets 94 et 98. La sortie du pulseur 32 est contrôlée par un volet 42, tandis qu'un volet 62 du type drapeau est prévu dans la chambre de sortie 48.

La figure 31A correspond à un mode de distribution : "dégivrage et aération". Le pulseur 16 est en fonctionnement, tandis que le pulseur 32 est arrêté, sa sortie étant en outre fermée par le volet 42. Les volets 94 et 98 peuvent être dans une position variable, alors que le volet 95 ferme l'accès à la sortie pieds 56. Le volet 62 est dans une position telle que le flux d'air ayant traversé le radiateur 14 est dirigé vers la sortie dégivrage 52 et la sortie d'aération 54. Le flux d'air émis par le pulseur 16 traverse l'évaporateur puis est ensuite réparti entre la branche de transmission d'air froid 120 et la branche de réchauffage d'air 122 par le volet de mixage.

Dans la position de la figure 31B, le dispositif est dans le mode de distribution "chauffage+dégivrage et chauffage+aération".

Les pulseurs 16 et 32 sont tous deux en fonctionnement. Le volet 42 est ouvert et le volet 62 est dans une position intermédiaire. De plus, les volets 94 et 98 sont dans une position quelconque. Le radiateur 14 est traversé par un flux F1 en partie supérieure et par un flux F2 en partie inférieure, les volets 42 et 62 contribuant à cloisonner ces deux flux.

Les sorties dégivrage 52 et aération 54 sont alimentées par un flux d'air à température réglée. La sortie pieds 56 est alimentée par un flux d'air chaud ou mixé en température provenant du pulseur 32 et ayant traversé la partie inférieure du radiateur.

Dans la position de la figure 31C, le dispositif est dans un mode de distribution dit "chauffage pieds".

Le pulseur 16 est arrêté, tandis que le pulseur 32 est en fonctionnement. Le volet 42 est en position de pleine ouverture ; le volet 62 est dans une position telle que le flux d'air ayant traversé le radiateur 14 est dirigé vers la sortie pieds 56. Comme dans la forme de réalisation précédente, les volets 94 et 98 peuvent être réglés en position pour ajuster la température de l'air envoyé vers la sortie pieds, en faisant varier la proportion du flux d'air traversant le radiateur et du flux d'air ne traversant pas le radiateur.

Le dispositif des figures 31A à 31C peut fonctionner aussi bien dans une configuration où les commandes de mixage sont conjuguées que dans une configuration où les commandes de mixage sont indépendantes.

Dans le premier cas, le fonctionnement du volet de mixage 116 et celui des volets de mixage 94 et 98 sont conjugués. Dans le deuxième cas, les deux fonctionnements sont indépendants.

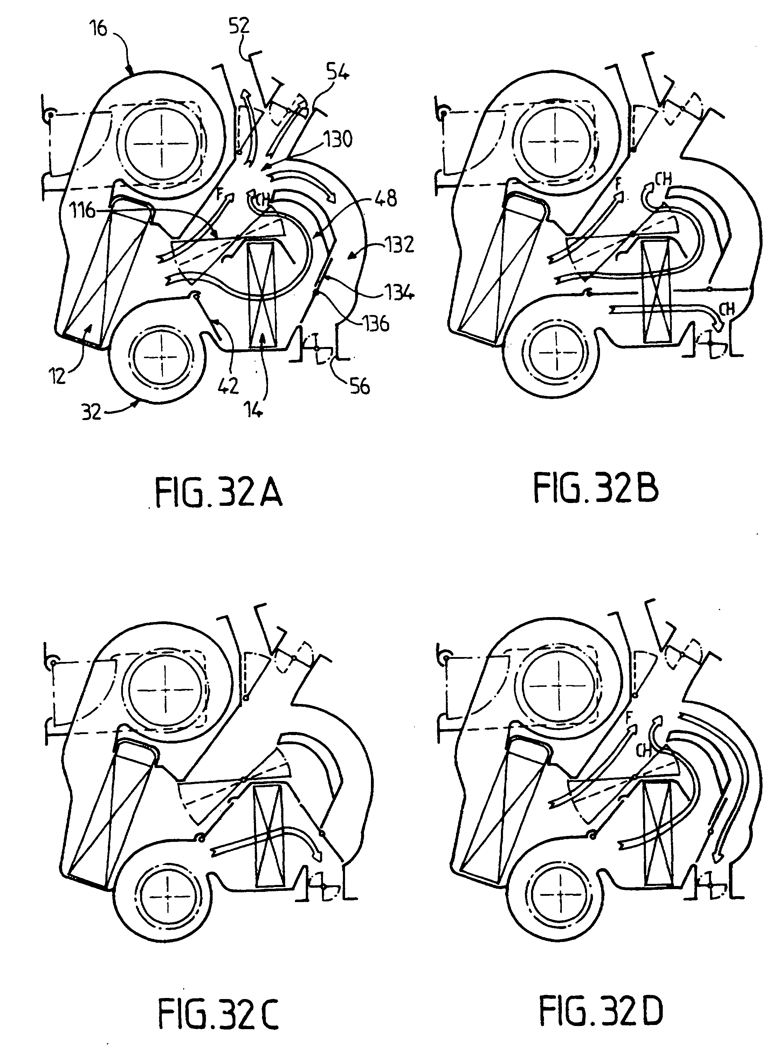

On se réfère maintenant aux figures 32A à 32D montrant un dispositif qui s'apparente à celui des figures 31A à 31C.

Ce dispositif comprend un passage d'air supérieur 66 contrôlé par un volet de mixage 116 analogue à celui de la figure 28.

Par contre, le dispositif ne comporte pas de passage d'air inférieur 92 comme dans le cas des figures 24, 28, 31A à 31C.

Le volet de mixage 116 permet de régler à la fois la température du flux d'air envoyé vers la sortie dégivrage 52 et la sortie aération 54 et celle du flux d'air envoyé vers la sortie pieds 56.

Le dispositif comprend une chambre de mixage 130 recevant de l'air à température réglée et alimentant d'une part les sorties 52 et 54 et, d'autre part, la sortie pieds 56 par un conduit 132, lequel peut communiquer avec la chambre de sortie 48 par un volet 134 du type papillon monté pivotant autour d'un axe 136.

Dans la position de la figure 32A, le pulseur 16 est en fonctionnement, tandis que le pulseur 32 est arrêté, sa sortie étant fermée par le volet 42. Le volet 134 est dans une position dans laquelle le conduit 132 est isolé de la chambre de sortie 48. La chambre de mixage 130 est alimentée par un flux d'air à température ajustée, dépendant de la position du volet de mixage. Le flux d'air à température ajustée est ensuite réparti entre les sorties 52, 54 et 56.

Dans la position de la figure 32B, les pulseurs 16 et 32 sont tous deux en fonctionnement. Les volets 42 et 134 sont dans une position telle que les flux d'air issus des deux pulseurs sont cloisonnés. Les sorties 52 et 54 sont alimentées par un flux d'air à température réglée en provenance du pulseur 16. Par contre, la sortie pieds 56 est alimentée par un flux d'air provenant du pulseur 32 et ayant traversé la partie inférieure du radiateur 14. Dans cette configuration, de l'air mixé est envoyé aux sorties dégivrage et aération, alors que de l'air chaud est envoyé à la sortie pieds. Cette configuration convient à des modes combinés avec un sur-réchauffement de la zone pieds.

Dans la position de la figure 32C, le dispositif est dans une configuration qui correspond à un autre mode "chauffage pieds".

Le volet 42 est en position de pleine ouverture, de même que le volet 134 en sorte que tout le flux d'air provenant du pulseur 32 traverse la section totale du radiateur 14. Le flux chaud issu du radiateur est ainsi envoyé uniquement vers la sortie pieds 56. Ce mode de fonctionnement permet une mise en température rapide de la zone des pieds de l'habitacle.

Dans la position de la figure 32D, le dispositif est dans un autre mode "chauffage pieds". Le volet 42 occupe la même position que dans la figure 32C. Par contre, le volet 134 isole le conduit 132 de la chambre de sortie 48. La chambre de mixage 130 est alimentée d'une part par un flux d'air froid provenant du pulseur 16 et d'autre part par un flux d'air chaud provenant du pulseur 32 et ayant traversé le radiateur 14. La chambre de mixage reçoit ainsi un flux à température ajustée qui peut être ensuite réparti entre les sorties 52, 54 et 56. Par conséquent, ce mode permet d'ajuster la température du flux d'air envoyé aux trois sorties précitées.

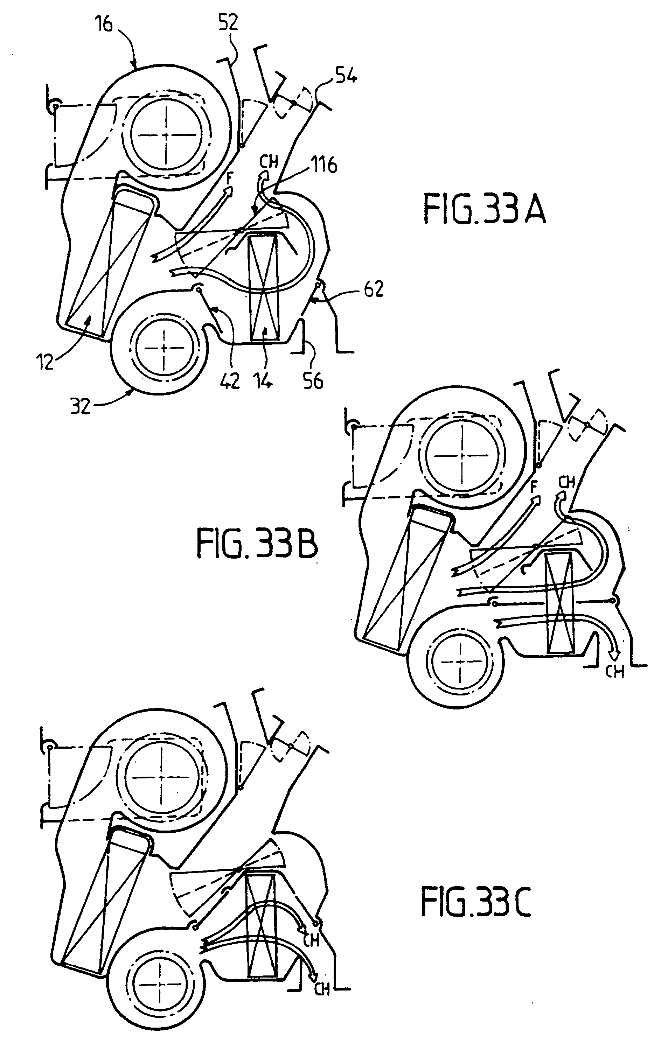

On se réfère maintenant aux figures 33A à 33C qui montrent différents modes de distribution d'un dispositif réalisé selon une variante du dispositif des figures 32A à 32C. Par rapport à la forme de réalisation précédente, le conduit 132 a été supprimé. La chambre de sortie 48 loge toujours un volet 62 comme décrit précédemment.

Dans la position de la figure 33A, le dispositif est dans un mode "dégivrage ou aération".

Le pulseur 16 est en fonctionnement, tandis que le pulseur 32 est arrêté, sa sortie étant fermée par le volet 42. Le volet 62 est dans une position telle que tout le flux d'air ayant traversé le radiateur 14 est envoyé vers la sortie dégivrage 52 et la sortie aération 54. Ainsi, ces deux sorties reçoivent de l'air mixé, tandis que la sortie pieds 56 n'est pas alimentée.

Dans la position de la figure 33B, le dispositif est dans un mode "dégivrage + aération" ou "chauffage + dégivrage".

Le volet 42 est dans une position intermédiaire, de même que le volet 62 ce qui permet de cloisonner les flux émis respectivement par le pulseur 16 et le pulseur 32, tous deux en fonctionnement. Les sorties 52 et 54 reçoivent de l'air mixé alimenté par le pulseur 16. En revanche, la sortie pieds 56 reçoit de l'air chaud émis par le pulseur 32 et ayant traversé la sortie inférieure du radiateur 14.

Dans la position de la figure 33C, le dispositif est dans un mode "chauffage pieds". Le pulseur 16 est arrêté, tandis que le pulseur 32 est en fonctionnement. Les volets 42 et 62 sont dans une position telle que tout le flux d'air émis par le pulseur 32 peut traverser le radiateur 14 et être ensuite dirigé uniquement vers la sortie pieds 56. Il en résulte que la sortie 56 reçoit un flux d'air chaud à température maximale.

Ainsi, le dispositif des figures 33A à 33C constitue une variante de celui des figures 32A à 32C, cette variante étant simplifiée dans la mesure où elle ne permet pas un ajustement de la température du chauffage pieds.

On comprendra que le dispositif de l'invention défini par les caractéristiques des revendications est susceptible de nombreuses variantes de réalisation, notamment en ce qui concerne les positions relatives des deux pulseurs par rapport au boîtier. Ces positions pourront être choisies en fonction des contraintes d'implantation et d'encombrement du véhicule auquel le dispositif est destiné.

Les enveloppes respectives des pulseurs pourront soit être rapportées sur le boîtier soit être intégrées à celui-ci, en étant par exemple venues de moulage avec lui.

En résumé, le dispositif de l'invention permet de diffuser deux flux d'air distincts ayant chacun une origine extérieure ou intérieure au véhicule. De préférence, la partie supérieure de l'habitacle sera alimentée par un flux d'air extérieur (ou éventuellement recirculé) de manière à éviter l'embuage des vitres du véhicule. Par contre, la partie inférieure de l'habitacle sera de préférence alimentée par de l'air recirculé pour favoriser notamment le chauffage.

Ainsi, les parties supérieure et inférieure de l'habitacle du véhicule peuvent être alimentées par deux flux d'air traité indépendamment en température.

De plus, le dispositif permet d'utiliser une ou deux sources de chaleur.

Dans ce dernier cas, il est possible, pour certains modes de distribution, d'unifier les deux sources de chaleur afin d'augmenter la puissance thermique.

## Revendications

1. Dispositif de chauffage et/ou de climatisation de l'habitacle d'un véhicule automobile, du type comprenant des moyens pulseurs (16, 32) propres à envoyer un flux d'air au travers d'un boîtier (10) logeant au moins un échangeur de chaleur (12 ; 14) et communiquant avec une sortie dégivrage (52), une sortie aération (54) et une sortie pieds (56), les moyens pulseurs comprenant un premier pulseur (16) propre à envoyer un premier flux d'air (F1) au travers d'une première partie (14A) d'un radiateur de chauffage (14) et un deuxième pulseur (32) propre à envoyer un deuxième flux d'air (F2) au travers d'une deuxième partie (14B) de ce radiateur, le premier pulseur (16) et le deuxième pulseur (32) étant deux pulseurs indépendants, **caractérisé en ce qu'**un moyen de répartition (42) monté pivotant est prévu dans le boîtier (10), en amont du radiateur (14) par rapport au deuxième flux d'air (F2), pour contrôler le premier flux d'air (F1) et/ou le deuxième flux d'air (F2) au travers du radiateur (14), et **en ce que** des moyens de distribution (62) sont prévus pour répartir le premier flux d'air (F1) et le deuxième flux d'air (F2), ayant traversé le radiateur (14), entre la sortie dégivrage (52), la sortie aération (54) et la sortie pieds (56).

2. Dispositif selon la revendication 1, **caractérisé en ce qu'**un évaporateur (12) est interposé entre le premier pulseur (16) et le boîtier (10), en sorte que le premier flux d'air (F1) traverse successivement l'évaporateur (12) et le radiateur (14), tandis que le deuxième flux d'air (F2) traverse seulement le radiateur (14).

3. Dispositif selon l'une des revendications 1 et 2, **caractérisé en ce que** le premier pulseur (16) et le deuxième pulseur (32) sont propres à être alimentés chacun par un flux d'air extérieur (AE) et/ou un flux d'air recirculé (AR).

4. Dispositif selon l'une des revendications 1 à 3, **caractérisé en ce que** la première partie (14A) du radiateur (14) est en partie haute et est située du côté de la sortie dégivrage (52) et de la sortie aération (54), tandis que la deuxième partie (14B) du radiateur est en partie basse et est située du côté de la sortie pieds (56).

5. Dispositif selon l'une des revendications 1 à 4, **caractérisé en ce que** le premier pulseur (16) et le deuxième pulseur (32) sont disposés tous deux d'un même côté, ou côté amont, du radiateur (14) et **en ce que** les sorties dégivrage (52), aération (54) et pieds (56) communiquent avec une chambre de sortie (48) située du côté opposé, ou côté aval, du radiateur (14), en sorte que le premier flux d'air (F1) et le deuxième flux d'air (F2) traversent le radiateur (14) dans la même direction.

6. Dispositif selon la revendication 5, **caractérisé en ce que** la chambre de sortie (48) loge un volet de distribution (62) propre à prendre au moins deux positions différentes : une position de fermeture en laquelle la chambre de sortie est divisée en un premier compartiment (48A) et un second compartiment (48B) en sorte que le premier flux d'air est dirigé vers la sortie dégivrage (52) et la sortie aération (54) alors que le deuxième flux d'air (F2) est dirigé vers la sortie pieds (56) ; et une position d'ouverture en laquelle le premier compartiment et le deuxième compartiment communiquent en sorte que le premier flux d'air (F1) et le deuxième flux d'air (F2) peuvent au moins en partie se mélanger.

7. Dispositif selon l'une des revendications 1 à 6, **caractérisé en ce que** le moyen de répartition comprend un volet de répartition (42) prévu en sortie du deuxième pulseur pour contrôler le deuxième flux d'air (F2).

8. Dispositif selon la revendication 7, **caractérisé en ce que** le volet de répartition (42) est propre à prendre une position de fermeture en laquelle la sortie du deuxième pulseur (32) est fermée et au moins une position d'ouverture en laquelle la sortie du pulseur (32) est ouverte.

9. Dispositif selon l'une des revendications 1 à 4, **caractérisé en ce que** le premier pulseur (16) est disposé d'un côté, ou côté amont, du radiateur (14) tandis que le deuxième pulseur (32) est disposé de l'autre côté, ou côté aval, du radiateur et **en ce que** les sorties dégivrage (52) et aération (54) communiquent avec une chambre de sortie (48) située du côté aval du radiateur, tandis que la sortie pieds (56) communique avec une partie inférieure du boîtier, du côté amont du radiateur, en sorte que le premier flux d'air (F1) et le deuxième flux d'air (F2) traversent le radiateur (14) dans des directions opposées.

10. Dispositif selon la revendication 9, **caractérisé en ce qu'**un volet de répartition est prévu en sortie du deuxième pulseur (32) pour contrôler le deuxième flux d'air (F2).

11. Dispositif selon la revendication 10, **caractérisé en ce que** le volet de répartition est propre à prendre au moins deux positions : une position de fermeture en laquelle la sortie du deuxième pulseur est fermée et une position d'ouverture en laquelle la sortie du deuxième pulseur est ouverte.

12. Dispositif selon l'une des revendications 10 et 11, **caractérisé en ce que** le volet de répartition est situé du côté amont du radiateur.

13. Dispositif selon l'une des revendications 9 à 12, **caractérisé en ce que** le premier pulseur (16) et le deuxième pulseur (32) sont situés adjacents au boîtier.

14. Dispositif selon l'une des revendications 9 à 12, **caractérisé en ce que** le premier pulseur (16) est situé adjacent au boîtier, tandis que le deuxième pulseur (32) est situé à distance du boîtier, en particulier près des places arrière (PA) du véhicule.

15. Dispositif selon l'une des revendications 1 à 14, **caractérisé en ce que** le radiateur (14) est propre à être traversé par un fluide chaud sous le contrôle d'un robinet de réglage de débit (46).

16. Dispositif selon l'une des revendications 1 à 14, **caractérisé en ce que** le boîtier (10) délimite une branche de réchauffage d'air (122) dans laquelle est logé le radiateur (14) et une branche de transmission d'air froid (120), et **en ce qu'**un volet de mixage (116) est prévu à la jonction des deux branches précitées (120, 122) pour assurer la répartition du premier flux d'air (F1) entre les deux branches et régler la température du flux d'air à envoyer vers les sorties dégivrage (52) et aération (54).

17. Dispositif selon l'une des revendications 1 à 16, **caractérisé en ce qu'**il comprend un passage d'air supérieur (66) prévu dans le boîtier près de la première partie (14A) du radiateur et communiquant avec une chambre de sortie (48) en aval du radiateur, ce passage d'air supérieur étant contrôlé par un volet (70 ; 88 ; 102) de sorte qu'une fraction du premier flux d'air (F1) puisse emprunter ce passage d'air supérieur sans traverser le radiateur (14).

18. Dispositif selon l'une des revendications 1 à 17, **caractérisé en ce qu'**il comprend un passage d'air inférieur (92) prévu dans le boîtier (10) près de la deuxième partie (14B) du radiateur et près de la sortie pieds (56) et communiquant avec une chambre de sortie (48) en aval du radiateur, ce passage d'air inférieur (92) étant contrôlé par au moins un volet (94, 98 ; 104 ; 108 ; 112) de sortie qu'une fraction du deuxième flux d'air (F2) puisse emprunter ce passage d'air inférieur sans traverser le radiateur.

19. Dispositif selon l'une des revendications 1 à 18, **caractérisé en ce que** le radiateur (14) est unique.

20. Dispositif selon l'une des revendications 1 à 18, **caractérisé en ce que** le radiateur (14) est formé par la réunion de deux radiateurs adjacents (14A, 14B) propres à être traversés respectivement par le premier flux d'air (F1) et le deuxième flux d'air (F2).

21. Dispositif selon l'une des revendications 1 à 20, **caractérisé en ce qu'**il comprend en outre un radiateur additionnel (128) situé en regard de la deuxième partie du radiateur et propre à être traversé aussi par le deuxième flux d'air (F2).

## Patentansprüche

1. Vorrichtung zum Heizen und/oder Klimatisieren einer Fahrgastzelle eines Kraftfahrzeugs, von der Art mit Pulsiermitteln (16, 32), die geeignet sind, einen Luftstrom durch ein Gehäuse (10) zu lenken, das zumindest einen Wärmetauscher (12; 14) beherbergt und mit einem Entfrostungsausgang (52), einem Belüftungsausgang (54) und einem Fußraumausgang (56) verbunden ist, wobei die Pulsiermittel einen ersten Pulsierer (16), der geeignet ist, einen ersten Luftstrom (F1) durch einen ersten Teil (14A) eines Heizkörpers (14) zu lenken, und einen zweiten Pulsierer (32) umfassen, der geeignet ist, einen zweiten Luftstrom (F2) durch einen zweiten Teil (14B) dieses Heizkörpers zu lenken, wobei der erste Pulsierer (16) und der zweite Pulsierer (32) unabhängige Pulsierer sind, **dadurch gekennzeichnet, dass** ein schwenkbar angebrachtes Aufteilungsmittel (42) in dem Gehäuse (10) relativ zu dem zweiten Luftstrom (F2) stromaufwärts von dem Heizkörper (14) vorgesehen ist, um den ersten Luftstrom (F1) und/oder den zweiten Luftstrom (F2) durch den Heizkörper (14) zu steuern, und dass Verteilungsmittel (62) vorgesehen sind, um den ersten Luftstrom (F1) und den zweiten Luftstrom (F2), die den Heizkörper (14) durchquert haben, zwischen dem Entfrostungsausgang (52), dem Belüftungsausgang (54) und dem Fußraumausgang (56) aufzuteilen.

2. Vorrichtung nach Anspruch 1, **dadurch gekennzeichnet, dass** ein Verdampfer (12) zwischen dem ersten Pulsiermittel (16) und dem Gehäuse (10) eingesetzt ist, so dass der erste Luftstrom (F1) nacheinander den Verdampfer (12) und den Heizkörper (14) durchquert, während der zweite Luftstrom (F2) nur den Heizkörper (14) durchquert.

3. Vorrichtung nach eine der Ansprüche 1 und 2, **dadurch gekennzeichnet, dass** der erste Pulsier (16) und der zweite Pulsier (32) geeignet sind, jeweils durch einen Strom von Außenluft (AE) und/oder einen Strom von rezirkulierter Luft (AR) gespeist zu werden.

4. Vorrichtung nach einem der Ansprüche 1 bis 3, **dadurch gekennzeichnet, dass** der erste Teil (14A) des Heizkörpers (14) sich im oberen Teil befindet und neben dem Entfrostungsausgang (52) und dem Belüftungsausgang (54) liegt, während der zweite Teil (14B) des Heizkörpers sich im unteren Teil befindet und neben dem Fußraumausgang (56) liegt.

5. Vorrichtung nach einem der Ansprüche 1 bis 4, **dadurch gekennzeichnet, dass** der erste Pulsierer (16) und der zweite Pulsierer (32) beide auf der gleichen oder stromaufwärtigen Seite des Heizkörpers (14) angeordnet sind, und dass der Entfrostungsausgang (52), der Belüftungsausgang (54) und der Fußraumausgang (56) mit einer Austrittskammer (48) in Verbindung stehen, die auf der gegenüberliegenden oder stromabwärtigen Seite des Heizkörpers (14) liegt, so dass der erste Luftstrom (F1) und der zweite Luftstrom (F2) den Heizkörper (14) in der gleichen Richtung durchqueren.

6. Vorrichtung nach Anspruch 5, **dadurch gekennzeichnet, dass** die Austrittskammer (48) eine Verteilerklappe (62) beherbergt, die geeignet ist, zumindest zwei unterschiedliche Positionen einzunehmen: eine Schließposition, in der die Austrittskammer in einen ersten Teilraum (48A) und einen zweiten Teilraum (48B) unterteilt ist, so dass der erste Luftstrom zum Entfrostungsausgang (52) und dem Belüftungsausgang (54) gelenkt wird, während der zweite Luftstrom (F2) zu dem Fußraumausgang (56) gelenkt wird, und einer zweiten Öffnungsposition, in der der erste Teilraum und der zweite Teilraum in Verbindung stehen, so dass der erste Luftstrom (F1) und der zweite Luftstrom (F2) sich zumindest teilweise mischen können.

7. Vorrichtung nach einem der Ansprüche 1 bis 6, **dadurch gekennzeichnet, dass** die Aufteilungsmittel eine Aufteilungsklappe (42) umfassen, die am Ausgang des zweiten Pulsierers vorgesehen ist, um den zweiten Luftstrom (F2) zu steuern.

8. Vorrichtung nach Anspruch 7, **dadurch gekennzeichnet, dass** die Aufteilungsklappe (42) geeignet ist, einen Schließstellung einzunehmen, in der der Ausgang des zweiten Pulsierers (32) geschlossen ist, und zumindest eine Öffnungsstellung einzunehmen, in der der Ausgang des Pulsierers (32) offen ist.

9. Vorrichtung nach einem der Ansprüche 1 bis 4, **dadurch gekennzeichnet, dass** der erste Pulsierer (16) auf einer Seite oder stromaufwärtigen Seite des Heizkörpers (14) angeordnet ist, während der zweite Pulsierer (32) auf der anderen Seite oder stromabwärtigen Seite des Heizkörpers angeordnet ist, und dass der Entfrostungsausgang (52) und der Belüftungsausgang (54) mit einer Austrittskammer (48) in Verbindung stehen, die auf der stromabwärtigen Seite des Heizkörpers liegt, während der Fußraumausgang (56) mit einem unteren Teil des Gehäuses auf der stromaufwärtigen Seite des Heizkörpers in Verbindung steht, so dass der erste Luftstrom (F1) und der zweite Luftstrom (F2) den Heizkörper (14) in entgegengesetzten Richtungen durchqueren.

10. Vorrichtung nach Anspruch 9, **dadurch gekennzeichnet, dass** eine Aufteilungsklappe am Ausgang des zweiten Pulsierers (32) vorgesehen ist, um den zweiten Luftstrom (F2) zu steuern.

11. Vorrichtung nach Anspruch 10, **dadurch gekennzeichnet, dass** die Aufteilungsklappe geeignet ist, zumindest zwei Stellungen einzunehmen: eine Schließstellung, in der der Ausgang des zweiten Pulsierers geschlossen ist, und eine Öffnungsstellung, in der der Ausgang des zweiten Pulsierers offen ist.

12. Vorrichtung nach einem der Ansprüche 10 und 11, **dadurch gekennzeichnet, dass** die Aufteilungsklappe auf der stromaufwärtigen Seite des Heizkörpers liegt.

13. Vorrichtung nach einem der Ansprüche 9 bis 12, **dadurch gekennzeichnet, dass** der erste Pulsierer (16) und der zweite Pulsierer (32) benachbart zum Gehäuse liegen.

14. Vorrichtung nach einem der Ansprüche 9 bis 12, **dadurch gekennzeichnet, dass** der erste Pulsierer (16) benachbart zum Gehäuse liegt, während der zweite Pulsierer (32) in einem Abstand zum Gehäuse liegt, insbesondere nahe der Rücksitze (R) des Fahrzeugs.

15. Vorrichtung nach einem der Ansprüche 1 bis 14, **dadurch gekennzeichnet, dass** der Heizkörper (14) geeignet ist, durch ein warmes Fluid unter der Steuerung eine Durchflussregelhahns (46) durchquert zu werden.

16. Vorrichtung nach einem der Ansprüche 1 bis 14, **dadurch gekennzeichnet, dass** das Gehäuse (10) einen Luftwiedererwärmungszweig (122), in dem der Heizkörper (14) untergebracht ist, und einen Kaltluftübertragungszweig (120) begrenzt, und dass eine Mischklappe (116) an der Verbindungsstelle der zwei vorgenannten Zweige (120, 122) vorgesehen ist, um für die Aufteilung des ersten Luftstroms (F1) zwischen den zwei Zweigen zu sorgen und die Temperatur des zu dem Entfrostungsausgang (52) und dem Belüftungsausgang (54) zu lenkenden Luftstroms einzustellen.

17. Vorrichtung nach einem der Ansprüche 1 bis 16, **dadurch gekennzeichnet, dass** sie einen oberen Luftdurchgang (66) umfasst, der in dem Gehäuse nahe dem ersten Teil (14A) des Heizkörpers vorgesehen ist und mit einer Austrittskammer (48) stromabwärts vom Heizkörper in Verbindung steht, wobei dieser obere Luftdurchgang durch eine Klappe (70; 88; 102) gesteuert wird, so dass ein Teil des ersten Luftstroms (F1) diesen oberen Luftdurchgang nehmen kann, ohne den Heizkörper (14) zu durchqueren.

18. Vorrichtung nach einem der Ansprüche 1 bis 17, **dadurch gekennzeichnet, dass** sie einen unteren Luftdurchgang (92) umfasst, der in dem Gehäuse nahe dem zweiten Teil (14B) des Heizkörpers und nahe dem Fußraumausgang (56) vorgesehen ist und mit einer Austrittskammer (48) stromabwärts vom Heizkörper in Verbindung steht, wobei dieser untere Luftdurchgang (92) durch zumindest eine Klappe (94, 98; 104; 108; 112) gesteuert wird, so dass ein Teil des zweiten Luftstroms (F2) diesen unteren Luftdurchgang nehmen kann, ohne den Heizkörper zu durchqueren.

19. Vorrichtung nach einem der Ansprüche 1 bis 18, **dadurch gekennzeichnet, dass** der Heizkörper (14) einteilig ist.

20. Vorrichtung nach einem der Ansprüche 1 bis 18, **dadurch gekennzeichnet, dass** der Heizkörper (14) durch die Vereinigung von zwei benachbarten Heizkörpern (14A, 14B) gebildet wird, die geeignet sind, jeweils durch den ersten Luftstrom (F1) und den zweiten Luftstrom (F2) durchquert zu werden.

21. Vorrichtung nach einem der Ansprüche 1 bis 20, **dadurch gekennzeichnet, dass** sie außerdem einen zusätzlichen Heizkörper (128) umfasst, der gegenüber dem zweiten Teil des Heizkörpers liegt und geeignet ist, auch durch den zweiten Luftstrom (F2) durchquert zu werden.

## Claims

1. Device for heating and/or for air conditioning the passenger compartment of a motor vehicle, of the type comprising blower means (16, 32) for sending an air flow through a casing (10) housing at least one heat exchanger (12; 14) and communicating with a defrosting outlet (52), a ventilation outlet (54) and a foot outlet (56), the blower means comprising a first blower (16) for sending a first air flow (F1) through a first part (14A) of a heating radiator (14) and a second blower (32) for sending a second air flow (F2) through a second part (14B) of this radiator, the first blower (16) and the second blower (32) being two independent blowers, **characterized in that** a pivotably mounted distribution means (42) is provided in the casing (10), upstream of the radiator (14) with respect to the second air flow (F2), to control the first air flow (F1) and/or the second air flow (F2) through the radiator (14), and **in that** distribution means (62) are provided to distribute the first air flow (F1) and the second air flow (F2), after passing through the radiator (14), between the defrosting outlet (52), the ventilation outlet (54) and the foot outlet (56).

2. Device according to Claim 1, **characterized in that** an evaporator (12) is interposed between the first blower (16) and the casing (10), in such a way that the first air flow (F1) passes in succession through the evaporator (12) and the radiator (14), while the second air flow (F2) passes through the radiator (14) only.

3. Device according to either of Claims 1 and 2, **characterized in that** the first blower (16) and the second blower (32) can each be supplied with an outside air flow (AE) and/or a recirculated air flow (AR).

4. Device according to any one of Claims 1 to 3, **characterized in that** the first part (14A) of the radiator (14) is in the upper part and is located on the side nearer the defrosting outlet (52) and the ventilation outlet (54), while the second part (14B) of the radiator is in the lower part and is located on the side nearer the foot outlet (56).

5. Device according to any one of Claims 1 to 4, **characterized in that** the first blower (16) and the second blower (32) are both located on one side, or the upstream side, of the radiator (14), and **in that** the defrosting outlet (52), the ventilation outlet (54) and the foot outlet (56) communicate with an outlet chamber (48) located on the opposite side, or the downstream side, of the radiator (14), in such a way that the first air flow (F1) and the second air flow (F2) pass through the radiator (14) in the same direction.

6. Device according to Claim 5, **characterized in that** the outlet chamber (48) houses a distribution shutter (62) which can have at least two different positions, namely a closed position in which the outlet chamber is divided into a first compartment (48A) and a second compartment (48B) in such a way that the first air flow is directed towards the defrosting outlet (52) and the ventilation outlet (54), while the second air flow (F2) is directed towards the foot outlet (56), and an open position in which the first compartment and the second compartment communicate in such a way that the first air flow (F1) and the second air flow (F2) can be at least partially mixed.

7. Device according to any one of Claims 1 to 6, **characterized in that** the distribution means comprises a distribution shutter (42) provided at the outlet of the second blower to control the second air flow (F2).

8. Device according to Claim 7, **characterized in that** the distribution shutter (42) is designed to have a closed position in which the outlet of the second blower (32) is closed, and at least one open position in which the outlet of the blower (32) is open.

9. Device according to any one of Claims 1 to 4, **characterized in that** the first blower (16) is located on one side, or the upstream side, of the radiator (14), while the second blower (32) is located on the other side, or the downstream side, of the radiator, and **in that** the defrosting outlet (52) and ventilation outlet (54) communicate with an outlet chamber (48) located on the downstream side of the radiator, while the foot outlet (56) communicates with a lower part of the casing on the upstream side of the radiator, in such a way that the first air flow (F1) and the second air flow (F2) pass through the radiator (14) in opposite directions.

10. Device according to Claim 9, **characterized in that** a distribution shutter is provided at the outlet of the second blower (32) to control the second air flow (F2).

11. Device according to Claim 10, **characterized in that** the distribution shutter is designed to have at least two positions, namely a closed position in which the outlet of the second blower is closed, and an open position in which the outlet of the second blower is open.

12. Device according to either of Claims 10 and 11, **characterized in that** the distribution shutter is located on the upstream side of the radiator.

13. Device according to any one of Claims 9 to 12, **characterized in that** the first blower (16) and the second blower (32) are located adjacent to the casing.

14. Device according to any one of Claims 9 to 12, **characterized in that** the first blower (16) is located adjacent to the casing, while the second blower (32) is located at a distance from the casing, particularly near the rear seats (PA) of the vehicle.

15. Device according to any one of Claims 1 to 14, **characterized in that** the radiator (14) can have a hot fluid passed through it, under the control of a flow control valve (46).

16. Device according to any one of Claims 1 to 14, **characterized in that** the casing (10) delimits an air heating branch (122) in which is housed the radiator (14) and a cold air transmission branch (120), and **in that** a mixing shutter (116) is provided at the junction of the two aforesaid branches (120, 122) to distribute the first air flow (F1) between the two branches and regulate the temperature of the air flow to be sent towards the defrosting outlet (52) and ventilation outlet (54).

17. Device according to any one of Claims 1 to 16, **characterized in that** it comprises an upper air passage (66) provided in the casing near the first part (14A) of the radiator and communicating with an outlet chamber (48) downstream of the radiator, this upper air passage being controlled by a shutter (70; 88; 102) in such a way that a fraction of the first air flow (F1) can travel through this upper air passage without passing through the radiator (14).

18. Device according to any one of Claims 1 to 17, **characterized in that** it comprises a lower air passage (92) provided in the casing (10) near the second part (14B) of the radiator and near the foot outlet (56) and communicating with an outlet chamber (48) downstream of the radiator, this lower air passage (92) being controlled by at least one shutter (94, 98; 104; 108; 112) in such a way that a fraction of the second air flow (F2) can travel through this lower air passage without passing through the radiator.

19. Device according to any one of Claims 1 to 18, **characterized in that** the radiator (14) is single.

20. Device according to any one of Claims 1 to 18, **characterized in that** the radiator (14) is formed by the combination of two adjacent radiators (14A, 14B) through which the first air flow (F1) and the second air flow (F2), respectively, can pass.

21. Device according to any one of Claims 1 to 20, **characterized in that** it comprises an additional radiator (128) which is located facing the second part of the radiator and through which the second air flow (F2) can also pass.
